(19) Europäisches Patentamt / European Patent Office / Office européen des brevets

(11) **EP 2 977 933 B1**

(12) **EUROPEAN PATENT SPECIFICATION**

(45) Date of publication and mention
of the grant of the patent:
**06.03.2019   Bulletin 2019/10**

(51) Int Cl.:
*G06K 9/46* (2006.01)    *G06K 9/62* (2006.01)

(21) Application number: **14002562.8**

(22) Date of filing: **22.07.2014**

(54) **Image classification**

Bildklassifizierung

Classification d'images

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.01.2016   Bulletin 2016/04**

(73) Proprietor: **Baden-Württemberg Stiftung gGmbH
70174 Stuttgart (DE)**

(72) Inventors:
• **Greiner, Thomas
67227 Frankenthal (DE)**
• **Le, Tan-Toan
76227 Karlsruhe (DE)**
• **Heizmann, Michael
76344 Eggenstein-Leopoldshafen (DE)**
• **Ziebarth, Mathias
76131 Karlsruhe (DE)**

(74) Representative: **Müller-Boré & Partner
Patentanwälte PartG mbB
Friedenheimer Brücke 21
80639 München (DE)**

(56) References cited:
• **DESMOND NG ET AL: "Classification of osteosarcoma T-ray responses using adaptive and rational wavelets for feature extraction", PROCEEDINGS OF SPIE, vol. 6802, 10 December 2007 (2007-12-10), page 680211, XP055165563, ISSN: 0277-786X, DOI: 10.1117/12.753026**

• **BAUSSARD A ET AL: "Rational multiresolution analysis and fast wavelet transform: application to wavelet shrinkage denoising", SIGNAL PROCESSING, ELSEVIER SCIENCE PUBLISHERS B.V. AMSTERDAM, NL, vol. 84, no. 10, 1 October 2004 (2004-10-01), pages 1735-1747, XP004558668, ISSN: 0165-1684, DOI: 10.1016/J.SIGPRO.2004.06.001**
• **S.T.N. NGUYEN; B.W.-H. NG: "Bi-orthogonal rational discrete wavelet transform with multiple regularity orders and application experiments", SIGNAL PROCESSING, vol. 93, no. 11, 2013, XP002735415,**
• **LE TAN-TOAN ET AL: "Optimized size-adaptive feature extraction based on content-matched rational wavelet filters", 2014 22ND EUROPEAN SIGNAL PROCESSING CONFERENCE (EUSIPCO), EURASIP, 1 September 2014 (2014-09-01), pages 1672-1676, XP032681820, [retrieved on 2014-11-11]**
• **JEFFREY NG ET AL: "Steering in Scale Space to Optimally Detect Image Structures", 22 April 2004 (2004-04-22), COMPUTER VISION - ECCV 2004; [LECTURE NOTES IN COMPUTER SCIENCE;;LNCS], SPRINGER-VERLAG, BERLIN/HEIDELBERG, PAGE(S) 482 - 494, XP019005798, ISBN: 978-3-540-21984-2 * sect.1 and 3 ***

EP 2 977 933 B1

- André Stumpf ET AL: "MAPPINGLANDSLIDESURFACEFISSURESWIT HMATCHE DFILTERINGAND OBJECT-ORIENTEDIMAGEANALYSIS", , 7 May 2012 (2012-05-07), XP055330734, Retrieved from the Internet: URL:https://www.researchgate.net/profile/N orman_Kerle/publication/271201416_Stumpf_e tal_GEOBIA_fissures_proc/links/54c0e3910cf 28a6324a3c1bf.pdf?origin=publication_list [retrieved on 2016-12-20]

- GRZEGORZEK M ET AL: "Local Wavelet Features for Statistical Object Classification and Localization", IEEE MULTIMEDIA, IEEE SERVICE CENTER, NEW YORK, NY, US, vol. 17, no. 1, 1 January 2010 (2010-01-01), page 118, XP011302868, ISSN: 1070-986X

**Description**

**Technical Field**

The present application relates to image classification, particularly to detecting and isolating regions or shapes in an image.

**Background**

Challenges may arise when extracting features from an image. In other words, it may be difficult to accurately identify objects in an image. For example, objects in an object class do not always appear in a unique size and the object sizes are diverse. In particular, in some cases images cannot be scaled precisely enough to detect an object having a particular attribute value. Put another way, there is a need for an image filter that is more closely matched to object characteristics and attributes. Put yet another way, there is a need to calibrate the resolution of an image filter to a level suitable for detecting image objects having a particular attribute value (e.g. having a particular size).

Further, a problem may arise when using uniform filter banks (e.g. classical dyadic or M-Channel filter banks). In particular, when scaling by an integer value (e.g. by downsampling according to an integer downsampling factor), it could be difficult to flexibly scale a transformation to the most suitable resolution. More particularly, it could be difficult to match the transformation to specific object attribute values (e.g. specific object sizes).

**Brief Description of the Figures**

FIG 1 shows a flow chart depicting a method for classifying a pixel of an image.

FIG 2 shows the impulse response of an exemplary object filter for a pimple.

FIG 3 shows a histogram for an object.

FIG 4 shows the impulse response of an exemplary low pass filter.

FIG 5 shows the impulse response of an exemplary high pass filter.

FIG 6 shows the impulse response of another exemplary high pass filter.

FIG 7 shows an exemplary filter bank with rational sampling factors.

FIG 8 shows an exemplary computer system that could be used to implement the claimed subject matter

**Detailed Description**

The subject matter described in this application can be implemented as a method or on a device, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can be implemented as a system including a processor, and a memory coupled to the processor. The memory may encode one or more programs to cause the processor to perform one or more of the methods described in the application. Further subject matter described in the application can be implemented using various machines.

For simplicity and illustrative purposes, the principles of the claimed subject matter are described mainly by referring to examples thereof. In the following description, numerous specific details are set forth in order to provide a thorough understanding of the examples.

Technical Definitions

In the following description, a number of technical terms are used. Exemplary definitions of these terms are provided below. These definitions should be understood in view of general knowledge in the technical field of the application. The definitions may cascade. For example, a downsampling factor may have the characteristics of a sampling factor.

A *processor,* as used herein, refers to central processing units, microprocessors, microcontrollers, reduced instruction set circuits (RISC), digital logic circuits such as a Field-Programmable Gate Arrays (FPGA) or application specific integrated circuits (ASIC), and any other circuit or processor capable of executing the functions described herein,

The terms "software" and "firmware" are interchangeable, and include any computer program (or computer program product) stored in memory for execution by a processor, including RAM memory, ROM memory, EPROM memory, EEPROM memory, and non-volatile RAM (NVRAM) memory. The above memory types are exemplary only, and are thus not limiting as to the types of memory usable for storage of the computer program (or computer program product).

An *image* (i.e. a digital image) may be represented in a computer as an array (e.g. with 2 or more dimensions) of pixel information. Pixel information describes the corresponding pixel, for example, the intensity (brightness) of the pixel, or the color of the pixel. Pixel information may also include estimated height values corresponding to a height of a surface at specific coordinates. For example, each value of the array may be a height value (i.e. an estimated height value), and the location of the value in the array may correspond to coordinates on a surface. Coefficients (values) of the image may refer to elements of the array. The image may be discrete, sampled and defined on a rectangular grid.

A *filter* (i.e. a digital filter, image filter or a digital image filter) may be represented in a computer via a set of filter coefficients, e.g. the filter may consist of the filter coefficients. The filter coefficients form elements of an array. The array of filter coefficients may have one dimension or multiple dimensions. Filtering involves applying the array to each pixel and its neighbors within an image.

A *multiresolution analysis filter* is used with sampling to create a series of approximations of an image, each differing by a sampling factor in resolution from its nearest neighboring approximations. One or more multiresolution analysis filters are used to encode the difference in information between adjacent approximations. For example, a wavelet filter or a contourlet filter may be used as a multiresolution analysis filter.

A *wavelet filter* is based on small waves of finite frequency and limited duration. The wavelet filter may be used as a multiresolution analysis filter. The wavelet filter may be based on the discrete wavelet transform or the standing wavelet transform.

An *analysis filter* may be applied to an image in order to transform a pixel into a feature. The analysis filter may be applied within a filter bank in order to derive a transformation (i.e. a plurality of features) from an image. In other words, analysis filters are applied to an image in order to transform the image.

A *synthesis filter* can be applied in order to reconstruct (i.e. reconstitute) an image from a transformation. Thus, the transformation is derived from the image using analysis filters and the reconstruction is derived from the transformation using synthesis filters.

Accordingly, in the context of digital filters, the terms *analysis* and *synthesis* are used to distinguish filters by when the filters are applied. In some cases, the same filters are used for analysis and synthesis. In other cases, the synthesis filters are derived from the analysis filters by performing mathematical operations on the filter coefficients of the analysis filters. Similarly, analysis filters may be derived from synthesis filters by performing mathematical operations on the filter coefficients of the synthesis filters.

A *filter bank* is a combination of different filters. Each filter in the filter bank corresponds to different image properties. The filter bank may include one or more high pass filters (filters that allows high-frequency signals to pass through). In addition, the filter bank may include one or more low pass filters (filters that allows low-frequency signals to pass through). The filter bank may include one or more of the following: an analysis filter, a synthesis filter, a multiresolution analysis filter, a wavelet filter. The filter bank may also include sampling functions. Each filter in the filter bank may have the same filter length. The width of the filter bank refers to the number of filters in the filter bank.

A *non-uniform filter bank* involves upsampling and downsampling during analysis. For example, in the non-uniform filter bank, upsampling may be applied to the input (e.g. an image), then the upsampled image may be filtered, and then downsampling may be applied to the filtered image.

A *uniform filter bank* does not involve upsampling during analysis. The term uniform indicates that downsampling performed during analysis corresponds to upsampling performed during synthesis.

A *sampling factor* is an upsampling factor and/or a downsampling factor.

A *downsampling factor* can be used in downsampling to reduce the number of coefficients in a filter or image. Downsampling using a downsampling factor of $M$ means that every $M$th sample (i.e. coefficient) is discarded and the other coefficients are kept. Downsampling is sometimes referred to as subsampling.

*Critical downsampling* involves downsampling using the maximum downsampling factor for which perfect reconstruction can be achieved. A critically downsampled filter (or filter bank) that allows perfect reconstruction is also referred to as a biorthogonal filter.

A biorthogonal filter may be invertible but not necessarily orthogonal. A wavelet filter or a multiresolution analysis filter may be biorthogonal.

In a *biorthogonal filter bank* including multiple high pass filters and multiple low pass filters, an analysis filter of the high pass filters may be orthogonal to a synthesis filter of the low pass filter and an analysis filter of the low pass filters may be orthogonal to a synthesis filter of the high pass filters. The analysis filter may be different from the synthesis filter.

*Biorthogonality* may be understood as a framework (e.g. a mathematical framework) for one or more filters that ensures perfect reconstruction. Thus, if the filters are modified within the framework, perfect reconstruction can be achieved.

An *upsampling factor* can be used in upsampling to increase the number of coefficients in a filter or image. Upsampling using an upsampling factor of $p$ means that $p$-1 values (e.g. zeros) are added between each coefficient, thereby increasing the sampling rate. Upsampling is interpolation, applied in the context of digital signal processing and sample rate conversion. In the context of the present application, the upsampling factor may be understood as an analysis upsampling factor, i.e. an upsampling factor used for upsampling during analysis (as opposed to synthesis), unless otherwise specified.

A *rational sampling factor* is the combination of an upsampling factor and a downsampling factor, where the upsampling factor may differ from the downsampling factor. The upsampling factor and the downsampling factor may be integer values.

A *rational downsampling factor* is a rational sampling factor wherein the downsampling factor is greater than the upsampling factor.

A *filter length* of a filter is the number of coefficients in the filter.

An *object* or pattern may refer to a region of the image. The object may be an arrangement of features. An object may represent an anomaly on a surface. For example, an object may represent a defect such as a dent or a pimple.

A *object curve* may be a two dimensional set of points defining a typical object of an object class. The object curve may represent an anomaly on a surface.

An *object filter* is a sampled and normalized object curve. The object filter may be one dimensional or two dimensional. For example, as a result of sampling, the object filter may consist of a proper subset of the points of the object curve, and as a result of normalization, the points may have a Euclidian norm of a constant value.

An *object class* links an image to a feature. The object class may include an object filter of a typical member of the class, a mean of each coefficient of the object filter, and a standard deviation for each coefficient of the object filter. Object classes may have characteristic shapes, e.g. circular or elliptical. For example, one characteristic shape may apply to all object classes.

An *object attribute* is a quantifiable property shared by multiple object classes. The object attribute can be detected by a machine and understood by a human. Examples of the object attributes are the object size (i.e. object length or object extent), object color or object intensity. In the context of a two dimensional elliptical object, the object size refers to a length of the major axis of the object. In the context of a circular object, the object size refers to the diameter of the circular object.

An *object attribute value* quantifies an object attribute. For example, if the object attribute is the object size (e.g. for circular objects), then the object attribute value might quantify the diameter of the object, e.g. 6 pixels. Alternatively, if the object attribute is the object color, then the object attribute value might quantify the RGB values (of the RGB color model) for the color. For example, #B0171F could be an object attribute value, since #B0171F is the hex RGB value of indian red.

An *object size* is an example of an object attribute value. The object size may be the length of a straight line connecting the center of the object with two points on the perimeter of the object. In the case of an elliptical object, the object size is defined by the major axis. In the case of a circular object, the object size is defined by the diameter.

A *feature* is a view or description of the image or a part of the image. For example, the feature may describe a pixel of the image. The feature may include (or consist of) a value calculated from the image that is more useful for a particular purpose that the original image. The feature may hide unnecessary image data. The feature may be calculated from the image using one or more image filters, e.g. analysis filters.

A *transform* can be applied to an image in order to calculate (or derive) a feature from the image. The transform may include one or more filters, e.g. the filter bank. The transform may operate in the discrete domain or the continuous domain. The transform may employ separable filters, e.g. a discrete cosine transform or a wavelet transform.

A *transformation* may include multiple features calculated from the image or all the features calculated from the image.

A *reconstruction* is derived from the transformation. The reconstruction of the image (i.e. the reconstruction) may be derived from the transformation via synthesis filtering and decompression.

*Perfect reconstruction* means that the output signal (i.e. the reconstruction derived from the transformation) is a copy of the input signal (i.e. the original or received image) with no further distortion other than a time shift and amplitude scaling.

*Numerical optimization,* also referred to as mathematical optimization, may be understood as the selection of a best element (with regard to some criteria) from a set of available alternatives.

A *generic filter,* also referred to as a standard filter, is composed of generic filter coefficients. A generic filter can be applied to any image. The coefficients of the generic filter are, in general, not matched to the contents of the image. The generic filter may be determined according to a conventional method.

An *optimized filter* may also be referred to as a matched filter or a tailored filter. An optimized filter may be represented in a computer as a two dimensional array of optimal filter coefficients (i.e. matched filter coefficients). The coefficients of the optimized filter may be tailored (or matched) to the contents of the image.

An *anomaly* is a set of points on a surface that are abnormal or unusual. For example, an anomaly may be a defect on the surface, such as a dent (valley, dimple, indentation, concave region) or a pimple (bulge, hump, protrusion, convex region). Alternatively, the anomaly may be a contamination on the surface, such as a stain. An anomaly could also be something desirable on the surface, i.e. something that is supposed to be on the surface.

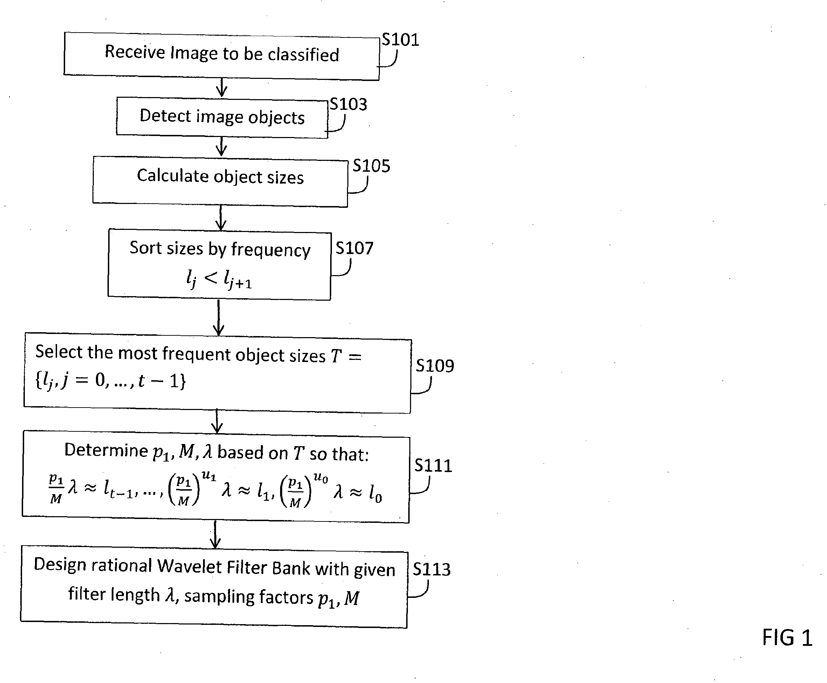

**FIG 1** shows a flow chart depicting a method for classifying a pixel of an image. The method may be used to classify all pixels of an object or some portion of the pixels in the image or all pixels in the image. Classification of feature vectors calculated from an image object (i.e. by transforming pixels of the object into features) may involve determining whether the feature vectors correspond to an object in the image representing an anomaly on the surface

In step S101 the image to be classified is received. The image may be received in a number of ways and in a number of formats. The image may be a representation of a surface. In other words, the image may be a picture capturing visual information about the surface. The surface may be a reflective surface such as a specular surface. In the case of the specular surface, the surface may be lacquered or glossy, such as part of the body of a car, e.g. a car door painted with glossy paint. The specular surface may be highly reflective.

In the context of the present application, the specular surface may exhibit both specular reflection and diffuse reflection, e.g. as in the case of an object painted with glossy paint.

For example, deflectometry (i.e. deflectometric reconstruction or a deflectometric method) or interferometry may be used to obtain the image representing the surface. Deflectometry may be suitable for specular surfaces because it exploits the specularity of the surface and features a high sensitivity to geometric deviations from the ideal surface shape.

Deflectometry may be performed using a deflectometric measurement system. The deflectometric measurement system may include a camera with image plane $I$, a surface $S(m,n)$, and a screen $L$ arranged in a triangular setup. On the screen, sinus pattern in horizontal and vertical directions for phase shifting methods may be displayed. The camera observes a distorted pattern of the screen over the specular surface. By observing a sequence of patterns, viewing rays from the camera plane $P_I$, can be uniquely assigned to points $P_L$ on the screen according to the following mapping $I$:

$$l : P_I \rightarrow P_L, l[u,v] = (x_L, y_L) \qquad (1)$$

The mapping of $I$ of equation (1) is called deflectometric registration. Without knowing the distance between the camera and the surface it is impossible to unambiguously reconstruct the surface from the deflectometric registration. Further information about deflectometry, particularly regularizing methods for deflectometry, can be found in S. Werling, M. Mai, M. Heizmann, and J. Beyerer, "Inspection of specular and partially specular surfaces," Metrology and Measurement Systems, vol. 16, pp. 415-431, 2009. A surface $S(m,n)$ may be obtained via deflectometry in a 2½ dimensional representation. The 2½ dimensional representation may be understood to mean that for each point in a 2D (two dimensional) domain, exactly one (estimated) height value is provided. Accordingly, each value in the image may represent the height of the surface at a particular point (i.e. at specific coordinates) on the surface. Thus,

$$S(m,n) = z, \text{with } (m,n) \in \mathbb{N}^2, z \in \mathbb{R} \qquad (2)$$

In this case, $z$ is the estimated height of each pixel and $m$ and $n$ are coordinates associated with the estimated height. In the context of an image array, a value $z$ in the image array represents a physical measurement of the height of a corresponding point on the surface. The values may be normalized such that, e.g., a value of 6 in the image may represent 6mm or 6cm, depending on the surface and the type of anomaly being searched for.

The image may be a square matrix, where each element in the matrix describes a point on the surface, i.e. each element describes the height of the surface at the described point. The image may be 1200x1200 pixels. Other resolutions would also be suitable.

While many different anomalies (e.g. defects) can appear on the surface, many of them have characteristic shapes. For example, many of the anomalies on the surface may be circular or elliptical (on the x,y plane). The size of the anomalies may range from very small to large, but their shape may remain the same for each class. Accordingly, a wavelet filter may be considered an appropriate method to detect and classify these anomalies.

As an alternative to a received image obtained via deflectometry, the image may represent a surface, e.g. a metal surface such as a manufactured metal surface. Instead of a 2½D representation, the received image may include intensities (i.e. brightness). In other words, the image may be a 2D array of intensity (brightness) values. The image may be obtained using a microscope with light from above. Each pixel of the image may describe the brightness of the surface at a particular point. Put another way, a value in the image array represents a degree of intensity of a corresponding point on the surface The image may be used detect contamination on the metal surface.

In step S103, objects (i.e. image objects) in the received image may be identified (i.e. determined or detected) using a conventional image processing technique, e.g. a feature extraction technique such as Laplacian of Gaussian or Prewitt operator. Each identified object may represent (i.e. depict or show) a potential anomaly on the surface. Thus, the identified object may be classified in an object class corresponding to a type of anomaly or as nothing (i.e. not belonging to an object class).

For example, objects in the image having a characteristic shape (e.g. circular) may be identified. In particular, in the context of the 2½D representation, an object with height deviations covering a circular area in the x,y plane may be detected. Thus, parts of the surface free of anomalies have a standard height, and deviations from the standard height have a particular shape, e.g. circular. Each image coefficient represents a distance in the z direction on the surface. The shape of the object is defined in the x and y directions, accordingly, an object defines a circular region in the x,y plane.

Further, the image may include a 2D curve (e.g. a curve in the x,z plane) representing an anomaly on the surface. The 2D curve may be identified as an object representing the anomaly.

Alternatively, in the context in which the received image is an array of intensity values, an object with brightness deviations covering a circular area in the x,y plane may be identified. In other words, brightness deviations having a characteristic shape, e.g. a circular shape, may be grouped together as an object.

Objects in the received image may also be identified (i.e. detected) using training data. For example, various surfaces may be comprehensively analyzed (e.g. manually or using other techniques) in order to identify anomalies, their shape characteristics and their attributes. The results of this analysis may then be extrapolated to image objects, object characteristics and object attributes.

Alternatively, an images may be obtained from various surfaces (e.g. as discussed above) and the images may be processed (e,g. manually or using conventional techniques) in order to determine the training data. When a new image is received, it may be determined which of the processed images the new image most closely corresponds to in order to determine suitable training data for identifying objects.

One or more object classes $C_i$ are determined. The object classes may be determined based on the objects identified (e.g. similar objects may be grouped into object classes) or the object classes may be predetermined according to application of the method (e.g. it may have been previously decided to analyze the image in order to search for objects having shapes or sizes within a specified range). Each object class corresponds to a type of anomaly (e.g. a type of defect or contamination) that can appear on the surface.

In particular, object classes may correspond to most common anomalies appearing on the surface. For example, object classes may correspond to a mix of common defects and other surface anomalies. Accordingly, in the context of analyzing a 2½D image obtained from a surface, two classes of anomalies may be determined, e.g. a pimple and dent. These classes may correspond to the most common defects appearing on the surface.

For each object class $C_i$, a 2D object curve describing a typical object of the object class may be determined. An object filter may be derived from the object curve. The object filter describes a member object that is typical of the object class, and may be understood as an estimation of the object curve. The object curve and the object filter are not considered object attribute values since they are representative of all objects in an object class and are not associated with individual objects.

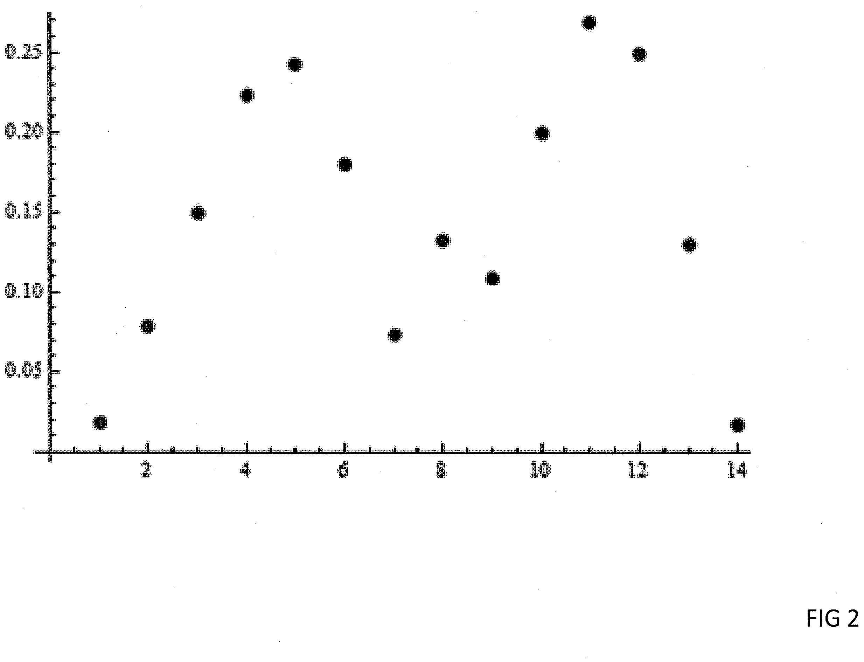

The object filter may be 1D and is derived by sampling and normalizing the object curve. Thus, after normalization, if $N$ sampling points are extracted from the object curve, then these sampling points define an object filter $h_q$ with length $N$. For example, the object filter may be derived by extracting 8 sampling points from the object curve and normalizing the sampled points to $\sqrt{2}$. The impulse response of an exemplary object filter is shown in FIG 2.

The object class may also include a first parameter vector $\mu_i$ defining the mean of each coefficient of a transformed object (i.e. multiple features, each of the features calculated by transforming one of the pixels of the object). The object class may also include a second parameter vector $\sigma_i$ defining the standard deviation of each coefficient in the first parameter vector $\mu_i$. Thus, for each mean coefficient of the first parameter vector $\mu_i$, a coefficient of the second parameter vector $\sigma_i$ defines a deviation range from the mean coefficient.

The use of object classes in classifying a pixel of an image are discussed in more detail below.

In step S105, an object attribute value shared by a subset of the identified image objects is established (i.e. calculated). In particular, a plurality of object attribute values are established. Each object attribute value may be shared by a plurality of the image objects. Thus, for each identified object, an object attribute value for an object attribute of the object may be calculated. The object attribute may be the same for all the objects. Thus, for each identified object, an object attribute value quantifying an object attribute of the object may be calculated.

An object attribute value may be shared by a proper subset of the image objects. When a plurality of object attribute values are established, each of the object attribute values is shared by a disjoint subset of the plurality of image objects. Thus, each of the subsets is a proper subset of the plurality of image objects and none of the subsets overlap.

In the context of objects identified via training data, a large number of objects may be analyzed. Within each object class, an object attribute value (e.g. object size value) that best describes an object attribute (e.g. object size) may be determined.

For example, a value quantifying object size may be calculated for each object.

The object size may be a particularly suitable object attribute for objects representing anomalies that have roughly the same (similar) length in each direction on the $x,y$ plane (length, width). For example, a dent in a car door may be a roughly circular depression (in the $x,y$ plane) in the surface of the door. Similarly a pimple in the car door may be a roughly circular bump (in the $x,y$ plane) on the surface of the door. Thus, in terms of Cartesian axes, a single length (i.e. object size) may express the extent of a deformation of the $z$ plane in terms of how much of the $x,y$ plane the deformation covers.

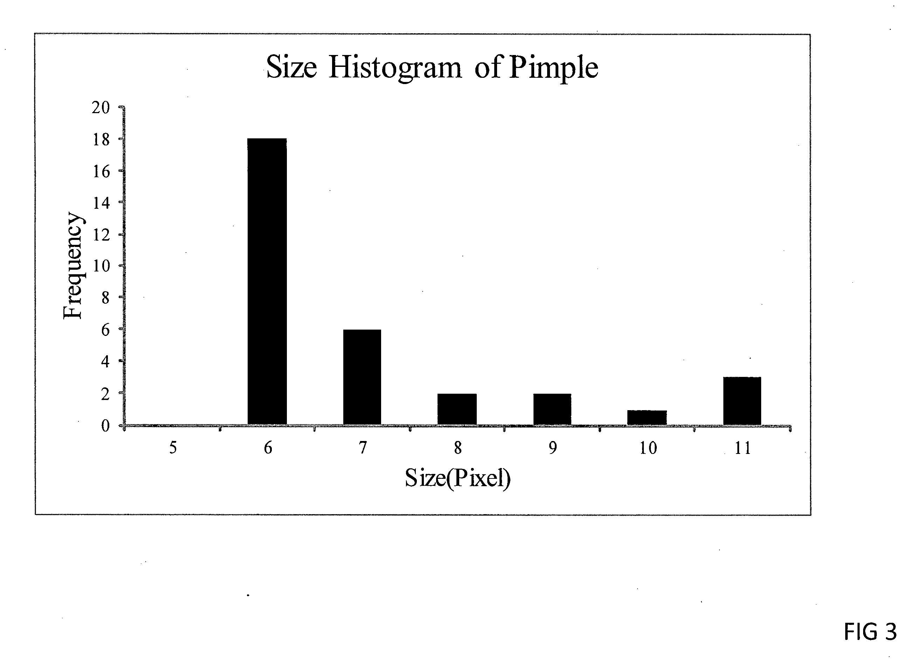

At step S107, the established object attribute values of each object class are sorted according to frequency of occurrence. In particular, the most frequently occurring object attribute values may be determined for each object class. The most frequently occurring object attribute values may be established by means of a histogram, e.g. the size histogram of FIG 3.

In step S109, a subset (e.g. a proper subset) of the established object attribute values are selected according to frequency of occurrence. Thus, the established object attribute value may be a frequently occurring object attribute value or one of the most frequently occurring object attribute values.

For example, the 2, 3, or 5 most frequently occurring (i.e. most dominant or significant) object attribute values may be selected. Alternatively, a percentage (e.g. top 1%, 3%, or 5%) of the most frequently occurring object attribute values may be selected.

Accordingly, a set $Q$ of objects having the same object class but having different object attribute values is created. Based on a number $n_{l_j}$ of objects with object attribute value $l_j$, the $t$ highest numbers, which means the $t$ most frequently occurring object attribute values in $Q$, are chosen:

$$T = \left\{ l_j, j = 0, \ldots, t-1, l_j < l_{j+1} \right\} \qquad (3)$$

Step S109 is also described in the context of FIG 3.

At step S111, one or more rational sampling factors for the selected object attribute values are determined. The rational sampling factors are used to scale one or more image filters according to an object attribute value. The rational sampling factors may be rational downsampling factors.

The one or more image filters include a high pass filter $h_{HP}$ and a low pass filter $h_{LP}$.

The rational sampling factors include a downsampling factor $M$, an upsampling factor $p_0$ and another upsampling factor $p_1$. On the basis of the object attribute value $T$ (defined in equation (3) above), $p_1$, $M$, and $\lambda$ are approximated so that

$$\frac{p_1}{M} \lambda \approx l_{t-1}, \ldots, \left(\frac{p_1}{M}\right)^{u_1} \lambda \approx l_1, \left(\frac{p_1}{M}\right)^{u_0} \lambda \approx l_0 \qquad (4)$$

In equation (4), $\lambda$ is an initial filter length, e.g., $\lambda$ is the number of coefficients in the high pass filter and the low pass filter. The filter length is modified during sampling. One or more (or all) of the variables in equation (4) may be integer values.

The upsampling factor $p_0$ is used to scale the low pass filter and the upsampling factor $p_1$ is used to scale the high pass filter. The downsampling factor $M$ is used to scale both the low pass filter and the high pass filter.

The calculation of approximate values using equation (4) may be performed according to a conventional numerical optimization, technique, e.g., as discussed in T. Greiner, "Orthogonal and biorthogonal texture matched wavelet filter banks for hierarchical texture analysis," Signal Processing, vol. 54, no. 1, pp. 1-22, 1996.

The sampling factors are restricted according to the following equation:

$$p_0 + p_1 \overset{!}{=} M \qquad (5)$$

The restriction of equation (5) is imposed on a filter bank with which the sampling factors are used, as discussed in more detail with regard to step S113.

Upsampling factor $p_0$ may be determined as

$$p_0 = M - p_1 \qquad (6)$$

Accordingly, in view of equations (4) and (6), a first rational sampling factor is $p_0/M$ and a second rational sampling factor is $p_1/M$.

The rational sampling factor $p_1/M$ calculated according to equation (4) is used to generate at least one image filter based on the object attribute value. More specifically, generating the image filter based on the object attribute value comprises matching the image filter to the object attribute value using the rational sampling factor $p_1/M$ and the rational sampling factor $p_0/M$. In particular, the rational sampling factor $p_1/M$ be used to scale the length of the image filter (e.g. the high pass filter) from the initial length $\lambda$ to the object attribute value. Even though the upsampling factor for the low pass filter $p_0$ is calculated in equation (6), the at least one image filter might not include a low pass filter.

In the case where the at least one image filter comprises multiple filters, the filters may all have the same length, e.g. the same initial length and the same (modified) length after each transformation.

The combination of the image filters and sampling functions that perform sampling according to sampling factors may be referred to as a filter bank.

Each of the filters has an initial length of $\lambda$ and is matched to object attribute values via the rational sampling factor $p_1/M$.

The rational sampling factor $p_1/M$ is used to generate a filter bank, in which the filters have an initial length of $\lambda$. The filter bank includes high pass filter $h_{HP}$ which has a curve shape similar to the objects in the set $Q$. The filter bank may be non-uniform and may be referred to as the non-uniform filter bank, because one or both of the upsampling factors $p_0$ and $p_1$ are used in conjunction with analysis filters of the filter bank.

The rational sampling factor $p_0/M$ is also be used to generate the filter bank. In particular, the filter bank includes a low pass filter $h_{LP}$.

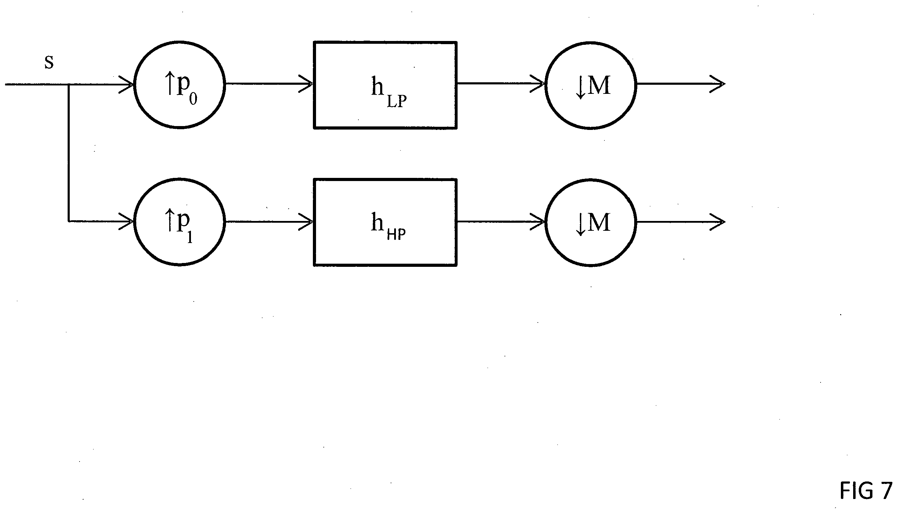

An example of the non-uniform filter bank with rational sampling factors is depicted in FIG 7.

At step S113, at least one image filter is generated based on the object attribute value. In particular, the initial length $\lambda$ of the filter, and the sampling factors (e.g. rational sampling factors) are matched to the object attribute value according to equation (4).

The at least one image filter is generated according to a biorthogonality framework that enables the filter length to be modified while still ensuring perfect reconstruction. Thus, by keeping the filter within the framework (maintaining biorthogonality), perfect reconstruction can still be achieved even after the filter length is modified. A biorthogonal framework may allow more flexibility to modify the filter than an orthogonal framework. A wavelet filter is an example of a filter that provides the framework.

The image filter may be a multiresolution analysis filter. In particular, the Image filter may be used in conjunction with the sampling factors to create features at different scales (i.e. resolutions).

The image filter includes a high pass filter $h_{HP}$. The at least one image filter is multiple filters including a high pass filter $h_{HP}$ and a low pass filter $h_{LP}$.

Generating the image filter based on the object attribute value may have the advantage that the image filter can be used to more accurately classify objects having different object attribute values, e.g. objects having different object sizes. In this way a significant number (e.g. the top 3 or top 5%) of most frequently occurring object attribute values can be correctly matched. Accordingly, in the case where the objects represent anomalies on a surface (e.g. a specular surface), the anomalies can be detected more accurately.

The generated image filter is a filter bank, e.g. the non-uniform filter bank discussed above. The filter bank is biorthogonal and constructed with wavelet filters.

If the filter bank is orthogonal or biorthogonal, then perfect reconstruction is guaranteed. If perfect reconstruction is guaranteed, then a feature or transformation created by applying the filter bank is compactly represented, i.e. there is no redundancy. This is an advantage of biorthogonal and orthogonal filter banks.

In particular, the filter bank may be biorthogonal without being orthogonal, i.e. the filter bank may be non-orthogonal. The condition of biorthogonality without orthogonality may ensure perfect reconstruction while providing more flexibility (i.e. imposing fewer constraints) when generating the filter bank. This is because orthogonal conditions are stricter than biorthogonal conditions. In other words biorthogonal filter banks introduce a weaker orthogonality condition by using an indirect mathematical formulation of orthogonality. An advantage of biorthogonality is a greater degree of freedom in the design of the wavelet function.

In the following example, the generated image filter is a non-uniform filter bank.

The non-uniform filter bank may be a biorthogonal wavelet filter bank generated based on the approach described in S.T.N. Nguyen and B.W.-H. Ng, "Bi-orthogonal rational discrete wavelet transform with multiple regularity orders and application experiments," Signal Processing, vol. 93, no. 11, pp. 3014 - 3026,2013. Accordingly, the non-uniform filter bank includes two filters, i.e. a low pass filter $h_{LP}$ and a high pass filter $h_{HP}$, with corresponding rational sampling factors $p_0/M$ and $p_1/M$. The sampling factors may be calculated as described in step S111.

The non-uniform filter bank may allow a wide selection of sampling factors. This means that the sampling factors of the non-uniform filter bank might only satisfy the restriction imposed by equation (5). A limited selection of sampling factors would be, for example, if the sampling factors $p_0$, $p_1$ and $M$ needed to satisfy the following restriction: $p_0 \overset{!}{=} 1,$

$p_1 \overset{!}{=} M - 1.$ With a wide selection of sampling factors, as allowed by equation (5), the non-uniform filter bank can be more accurately matched to the most frequently occurring object attribute values.

The non-uniform filter bank includes the low pass filter $h_{LP}$ and the high pass filter $h_{HP}$, as well as the sampling factors $p_0$, $p_1$ and $M$ (e.g., as depicted in FIG 7). The non-uniform filter bank may also include additional filters. Initially, i.e. before the optimization described below, the filters $h_{LP}$ and $h_{HP}$ may be generic filters derived according to conventional techniques.

The non-uniform filter bank is optimized, e.g. using the object filter discussed in connection with step S103. The non-uniform filter bank may have one or more of the following properties:

- the filters are wavelet filters,
- there are 2 channels,
- the filter bank is biorthogonal and non-orthogonal.

In a first optimization step, the filter low pass filter $h_{LP}$ is optimized such that it remains a low pass filter with the following least square objective function:

$$f_0(h_{LP}) = h_{LP}^T (P_{P_0} + P_{S_0}) h_{LP} \qquad (7)$$

where $P_{P_0}$ and $P_{S_0}$ are real symmetric positive semi-definite matrices to optimize the pass-band and stop-band of $h_{LP}$ and ensure that $h_{LP}$ remains a low pass filter when optimization is finished. Optimizing $h_{LP}$ may involve minimizing noise, e.g. as described in Y. Wisutmethangoon and T. Q. Nguyen, "A method for design of Mth-band filters", IEEE Trans. Signal Processing, vol. 47, no. 6, pp. 1669-1678, 1999.

Thus, the low pass filter is minimized according to an objective function, e.g. the objective function $f_0(h_{LP})$. Further, the objective function $f_0(h_{LP})$ is minimized according to the following constraint:

$$g_0 : \| h_{LP} - h_q \|^2 > \varepsilon_0 \qquad (8)$$

The vector norm denoted by "∥∥" in equation (8) may be the 2-norm (also referred to as the Euclidean norm). By minimizing according to the constraint of equation (8), $h_{LP}$ differs to at least some extent from the typical object exemplifying the object class. In some cases $h_{LP}$ may differ from $h_q$ by as much as can be allowed by the optimization of $f_0$ (e.g. as determined via experimentation). In other words, the distance between $h_{LP}$ and $h_q$ is at least $\varepsilon_0$. A possible value for the constant $\varepsilon_0$ is $2\sqrt{2}$.

After the first optimizing step, filter coefficients of $h_{LP}$ are available for optimizing the high pass filter $h_{HP}$. $h_{LP}$ and $h_{HP}$ are biorthogonal and/or wavelet filters.

According to a second optimizing step discussed below, $h_{HP}$ is constrained so that it is biorthogonal to the low pass filter $h_{LP}$, as optimized in the first optimizing step.

In the example below, $h_{LP}$ and $h_{HP}$ are assumed to be part of the non-uniform filter bank, e.g. as depicted in FIG 7.

The biorthogonality of the non-uniform filter bank including $h_{LP}$ and $h_{HP}$ may be ensured by transforming the non-uniform filter bank into an equivalent uniform filter bank (e.g. a uniform M-channel filter bank) and calculating biorthogonality constraints from the uniform filter bank. The biorthogonality constraints can then be considered when optimizing the non-uniform filter bank, as discussed in more detail below.

Regarding the equivalence of the non-uniform and the uniform filter bank, the following is noted.

$H_{LP}(z)$ is the z-Transform of the low pass filter $h_{LP}$, $H_{HP}(z)$ is the z-Transform of the high pass filter $h_{HP}$, and $H_n$ is the z-Transform of a uniform filter bank $h_n$. As long as the z-Transforms $H_{LP}(z)$ and $H_{HP}(z)$ can be decomposed into

$$H_{LP}(z) = \sum_{n=0}^{p_0-1} z^{Mn} H_n(z^{p_0}) \qquad (9)$$

and

$$H_{HP}(z) = \sum_{n=0}^{p_1-1} z^{Mn} H_{n+p_0}(z^{p_1}) \qquad (10)$$

the non-uniform filter bank including the low pass filter $h_{LP}$ and the high pass filter $h_{HP}$ is equivalent to the uniform filter bank ($h_n$) with $M$ channels, with respective z-Transforms: $H_0$, $H_1$, ..., $H_{p_0+p_1}$-1. In other words, if the conditions imposed by equations (9) and (10) are met, the non-uniform filter bank with rational sampling factors $p_0/M$ and $p_1/M$ is equivalent to the uniform M-channel filter bank $h_n$. The variable $n$ is used as an index value in equations (9) and (10) and should not be equated with other variables $n$, e.g. in equation (2).

The biorthogonality constraints for the non-uniform filter bank may be calculated from the uniform filter bank as follows.

The uniform filter bank may have $M$ channels and filters $h_i$. The uniform filter bank may include $M$ analysis filters and $M$ synthesis filters. The z-Transforms of the M analysis filters are $H_i$ and the z-Transforms of the $M$ synthesis filters are $G_i$ (i= 0, ...,$M$ - 1). A signal $s(n)$, e.g. the received image, can be analyzed by the $M$ analysis filters to create decomposition coefficients (i.e. a transformation). With the $M$ synthesis filters, the decomposition coefficients can be used to construct a signal $\tilde{s}(n)$, i.e. a reconstruction derived from the decomposition coefficients. The following is a perfect reconstruction condition: $s(n) = z^{-n_0} * \tilde{s}(n)$. Thus, when the uniform filter bank fulfills the perfect reconstruction condition, the uniform filter bank allows perfect reconstruction. If the uniform filter bank allows perfect reconstruction, the uniform filter bank is also biorthogonal.

The perfect reconstruction condition is fulfilled if the determinant $\Delta_Q(z)$ of the polyphase matrix $Q(z)$ of the filters $h_i$ consists of only a single term $z^{-n_0}$. $n_0$ may be be arbitrarily chosen. $Q(z)$ has the form:

$$Q_{ij}(z) = z^{-j} H_{ij}(z^M) \qquad (11)$$

$H_{ij}(z^M)$ is the $j$th polyphase component of the $i$th transformed filter.

The determinant of $H_{ij}(z^M)$, $\Delta_Q(z)$ can be approximated as

$$\Delta_Q(z) = c_0 z^{-M\frac{M-1}{2}} + \cdots + c_{N-M} z^{-\left[MN-M\frac{M+1}{2}\right]} \qquad (12)$$

with constants $c_m$, $m = 0, ...,N$ - $M$, where $M$ is the number of analysis filters and the number of synthesis filters and N is the number of coefficients in each filter. Thus, $N$ is equal to $\lambda$.

Further details regarding $Q(z)$, approximation of the determinant $\Delta_Q(z)$, the constants $c_m$, and ensuring that a uniform filter bank allows perfect reconstruction can be found in M. Vetterli, "Filter banks allowing perfect reconstruction," Signal Processing, vol. 10, no. 3, pp. 219-244, 1986. In particular, each of the constants $c_m$ is a function of coefficients of filters in the uniform filter bank of $h_i$.

The constants $c_m$ in equation (12) are the biorthogonality constraints, and can be used when optimizing the high pass filter $h_{HP}$ in order to ensure the biorthogonality of the non-uniform filter bank, as discussed below.

Equation (13) describes how to build the uniform filter bank $h_i$ from the non-uniform filter bank including the generic high pass filter $h_{HP}$ and the optimized low pass filter $h_{LP}$. Accordingly, the generic high pass filter $h_{HP}$ and the optimized low pass filter $h_{LP}$ are combined in vectors (i.e. filters) $h_i$ ($i = 0 ...,M$ - 1) as polyphase components for the rational sampling factors ($p_0/M$) and ($p_1/M$) derived in step S111:

$$h_i[n] = \begin{cases} h_{LP}[i + np_0] \text{ for } i = 0, ..., p_0 - 1, \\ h_{HP}[i - np_0 + np_1] \text{ for } i = p_0, ..., M - 1. \end{cases} \qquad (13)$$

The non-uniform filter bank of $h_{HP}$ and $h_{LP}$ is equivalent to the uniform filter bank $h_i$ constructed according to equation (13). The constraints of equations (9) and (10) are implicitly met when building the uniform filter bank according to equation (13). Accordingly, the non-uniform filter bank is biorthogonal if the equivalent uniform filter bank is also biorthogonal. This is because the uniform filter bank is built using the coefficients of the non-uniform filter bank, i.e. as specified in equation (13).

In order to maintain the biorthogonality of the non-uniform filter bank when optimizing the high pass filter $h_{HP}$,

all the constants $c_m$ of equation (12) except one must be 0. Further, as mentioned above, each of the constants $c_m$ is a function of coefficients of filters in the uniform filter bank $h_i$. Since the non-uniform filter bank $h_{HP}$ and $h_{LP}$ is transformed into the uniform filter bank $h_i$ according to equation (13), the coefficients of $h_i$ are also coefficients of $h_{HP}$ and $h_{LP}$. Accordingly, each of the constants $c_m$ is a function of coefficients of $h_{HP}$ and $h_{LP}$ and can therefore be used as constraints for optimizing $h_{HP}$.

Thus, the biorthogonality of the non-uniform filter bank may be maintained while optimizing the high pass filter $h_{HP}$ by ensuring that each of the constants $c_m$ (except one) of the determinant $\Delta_Q(z)$ of the polyphase matrix $Q(z)$ remain 0 during the optimization.

The high pass filter $h_{HP}$ is optimized according to the following least square objective function

$$f_1(h_{HP}) = h_{HP}^T(P_{P_1} + P_{S_1})h_{HP} \qquad (14)$$

As in equation (7) for the optimizing the low pass filter $h_{LP}$, $P_{P_1}$ and $P_{S_1}$ are used to optimize (e.g. reduce noise) the pass-band and stop-band for $h_{HP}$.

Furthermore, the equation (15) may be used as a constraint when minimizing the objective function of equation (14), such that the distance between the filter $h_{HP}$ and the object filter $h_q$ is less than a given constant $\varepsilon_1$. Thus, $h_{HP}$ may be similar to the object filter $h_q$.

$$g_1 : \| h_{HP} - h_q \|^2 < \varepsilon_1 \qquad (15)$$

The value of $\varepsilon_1$ may be determined experimentally. A possible value of $\varepsilon_1$ is $\sqrt{2}$.

Accordingly, the filter $h_{HP}$ can be optimized by minimizing the objective function of equation (14). In order to ensure biorthogonality, the optimization may be performed with the constraint that each of the constants $c_m$ (except one) of the determinant $\Delta_Q(z)$ in equation (12) are 0. The constraint of equation (15) may also be imposed, as discussed above.

Generating the image filter based on the object attribute value may comprise applying sampling factors, e.g. the rational sampling factors derived as discussed in step S111, to the image filter in order to match the image to the object attribute value. More particularly, the sampling factors derived in step S111 may be applied to the optimized filter bank, derived as discussed above. Thus, the one or more sampling factors and/or the filter length are calculated according to one or more (or all) of the established object attribute values (as specified in equation (4)). The calculated sampling factors can then be used to transform the optimized image filter in order to match the optimized image filter to the established object attribute values.

In particular, a first transformation of the optimized image filter may be performed in order to match a first established object attribute value. A second transformation of the transformed image filter (i.e. the filter resulting from the first transformation) may be performed in order to match a second established object attribute value. Transformations of the image filter may cascade, the result of the previous transformation may be the basis for the next transformation. Each transformation may comprise upsampling and downsampling the image filter.

For example, using a matched sampling factor, e.g. the sampling factor $p_1/M$ derived in step S111, the initial length $\lambda$ of the high pass filter $h_{HP}$ can be scaled to an object attribute value determined in step S109. In particular, the length of the high pass filter can be scaled to one of the most frequently occurring object attribute values. For example, referring to equation (4), the initial length $\lambda$ can be scaled to the object attribute value $l_{t-1}$ by a first transformation (e.g., upsampling and downsampling according to the matched sampling factors as shown in FIG 7), and to other sizes after further transformations (e.g. further upsampling and downsampling according to the matched sampling factors).

Referring again to equation (4), image filters matched to object attribute values $l_1$ and $l_0$ may be obtained by the $u_1$-th and $u_0$-th transformations respectively ( $u_i \in \mathbb{N}, 1 < u_i < u_{i-1}$ ). Accordingly, the optimized filter may be matched to most of the most frequently occurring object attribute values after some transformations.

For each transformation k performed by applying the rational sampling factors $p_1$ and $M$, such that $(p_1/M)^k\lambda = l_j \in T$, the transformations produced for each object attribute value are considered as features $d_k$ for classification in a classification step discussed below. Thus, each pixel of the image may be represented by one or more features $d_k$, and the features may be used to classify the pixel in one of the determined object classes $C_i$. The statement that the feature vector $d$ belongs to object class $C_i$ is equivalent to the statement that the pixel represented by the feature vector $d$ belongs to the object class $C_i$.

By generating the one or more image filters based on the object attribute value, feature extraction may be improved. In other words, the at least one feature extracted from the image by transforming the image via the image filter may contain more useful information than a feature extracted using other approaches. The improved feature extraction may lead to better (i.e. more accurate) pixel classification.

The classification step may be performed in a number of ways. An advantage of the present classification approach is that particularly simple techniques for classification may be used. This is because the feature (or feature vector) of the present approach is based on (i.e. tailored to) the object attribute value and accordingly includes more information about the object than a feature used in a conventional approach.

One simple classification technique is described in the classification step below. Other classification techniques, e.g. more complex classification techniques, could also be used.

In the following, supervised classification is applied. In this context, supervised classification means that class characteristics (e.g. mean and standard deviation) are already known. For example, in the context of a specular surface, object classes may include a dent class and a pimple class, and the general characteristics of each class may already be known. Unsupervised classification (e.g. in which objects are classified into class that are not predetermined) is also possible.

For classification a maximum a posteriori decision may be made for each point on the surface separately. By defining the parameter vectors $\mu_i$ and $\sigma_i$ as mean and standard deviation of each coefficient in object class $C_i$ for all features $d_k$ in vector $d$, the probability that $d$ belongs to object class $C_i$ (where $C_i$ is defined by the parameter vectors $\mu_i$ and $\sigma_i$) is determined according to Bayes' theorem:

$$p(\mu_i, \sigma_i, \, |d) = \frac{p(d \, |\mu_i, \sigma_i) p(u_i, \sigma_i)}{p(d)} \qquad (16)$$

$p(\mu_i, \sigma_i, |d)$ is the probability that the pixel represented by feature vector $d$ belongs to the class $C_i$. Accordingly, $p(u_i, \sigma_i$ is that the probability an arbitrary pixel in the image belongs to the object class $C_i$, regardless of other information. $p(d \, |\mu_i, \sigma_i)$ is the probability that, given that a pixel is in the object class $C_i$, the pixel is represented by the feature vector $d$. $p(d)$ is the probability that an arbitrary pixel in the image is represented by the feature vector $d$.

The vector $d$ may include all features corresponding to a particular pixel of the image. In particular, each feature of the vector $d$ may result from transforming the pixel via an image filter matched to a different object attribute value.

Tests have shown that the probability that, given that a pixel is in the object class $C_i$, the pixel is represented by the feature vector $d$, can be modelled as a product of univariate Laplace distributions, as follows:

$$p(d \, |\mu_i, \sigma_i) = \prod_k \frac{1}{\sigma_{i,k} \sqrt{2}} \exp\left(-\sqrt{2} \frac{|d_k - \mu_{i,k}|}{\sigma_{i,k}}\right) \qquad (17)$$

The parameter vectors $u_i$ and $\sigma_i$ for each class $C_i$ may be learned with a training set for the class. The prior probability distribution is chosen as being uniformly distributed, but this could be changed, e.g. based on appropriate knowledge. In other words, equation (17) is a simplifying assumption indicating that objects are assumed to have a particular distribution in the image and that prior knowledge about how the objects are distributed is not considered in classification.

A specific example follows, in which the received image is obtained by applying deflectometry to a first specular surface as discussed above in the context of step S101. In addition, a second specular surface and a third specular surface may be analyzed.

Two object class may be defined, one object class for pimple anomalies ($C_p$) and another object class for dent anomalies ($C_d$). The first surface has 3 large dents and 33 pimples, the second surface has 3 large dents and 14 pimples and the third surface has 123 pimples. Pimples may be significantly smaller than dents. Both dents and pimples may be roughly circular in shape.

Continuing the example, the surfaces have uneven formations, referred to as orange peel, which result in measurement noise and complicate detection of anomalies.

Each of the dents and pimples on the first surface may be represented by curves in the image representing the first surface. An object curve defining a typical (i.e. average) pimple may be determined.

**FIG 2** shows the impulse response of an exemplary object filter for a pimple. As discussed above, the object filter may be derived by sampling and normalizing the object curve. The object filter may describe a member object that is typical (i.e. average) of one object class (e.g. class pimple) in the received image. Other (different) object filters may describe typical objects in other classes. The object filter, $h_q$ (depicted in FIG 2), may have the following coefficients:

$h_q = \{0.0185832923180244, 0.0791189573536351, 0.15, 0.223058178959291,$

$0.243441390512293, 0.18, 0.0735741681495643, 0.133077581240115,$
$0.108715572189074, 0.2, 0.268876359316171, 0.249052390375203, 0.13,$
$0.0167156719597238\}.$

**FIG 3** shows a histogram for an object. In the example of FIG 3, the histogram is a size histogram of an object of object class pimple. The x axis shows a size (e.g. a diameter) of the object in pixels. The y axis shows the frequency of occurrence in the image. For example, according to FIG 3, 18 objects having an object size of 6 appear in the image.

As discussed in the context of step S109 of FIG 1, the histogram may be used in the context of finding and selecting the most frequently occurring object attribute values. For example, when generating an image filter, the image filter may be generated based one of the most frequently occurring object attribute values. In other words, the image filter may be matched to one of the most frequently occurring object attribute values or the image filter may be a function of one of the most frequently occurring object attribute values.

Steps S103 to S111 are carried out as discussed above. In particular, sampling factors $p_0$ (upsampling factor for low pass filter), $p_1$ (upsampling factor for high pass filter), and $M$ (downsampling factor) are determined.

For example, referring to FIG 3, a number of object attribute values are established. Each object attribute value is shared by a proper subset of image objects. For example, object attribute value 6 is shared by 18 image objects and object attribute value 7 is shared by 6 image objects.

Accordingly, in the example of FIG 3, the three most frequently occurring object attribute values are 6, 7 and 11 (i.e. objects of object class pimple most frequently occur with diameters of 6, 7, and 11). Thus, one or more (or all) of these object attribute values may be selected. Accordingly, the image filter may be generated based on one of these three values. In some cases, a different image filter may be generated for each of the selected object attribute values. Thus, each image filter may be based on (i.e. matched to or generated as a function of) a different one of the selected object attribute values.

The most frequently occurring object attribute values 6, 7, and 11 correspond to $l_0$, $l_1$, and $l_2$ respectively. By performing numerical optimization according to equation (4), the following parameters can be calculated $\lambda = 14$, $p_1 = 4$,

$$\frac{p_1}{M}\lambda \approx l_2, \left(\frac{p_1}{M}\right)^3 \lambda \approx l_1, \left(\frac{p_1}{M}\right)^4 \lambda \approx l_0.$$

and $M = 5$ satisfy

Accordingly, an image filter can be generated based on the calculated parameters. In particular, a first image filter can be generated with an initial filter length of $\lambda = 14$. The first image filter can then be matched to object attribute value 11 by transforming the first image filter into a second image filter. In particular, the first image filter can be transformed into the second image filter by upsampling the first image filter by a factor of $p_1 = 4$ and downsampling the first image filter by a factor of $M = 5$. Similarly, the second image filter can be matched to object attribute value 7 by transforming the second image filter into a third image filter, etc.

The image filters generated above may be high pass filters. In this example, a low pass filter may not be needed.

In general, before generating the filter bank, a number of scales for the filter bank may be determined. The number of scales is the depth of the filter bank, i.e. the number of filters in the longest branch of the filter bank. Referring to FIG 7, one branch may include the low pass filter $h_{LP}$ and another branch may include the high pass filter $h_{HP}$. The number of scales for the filter bank in the example above is 3, i.e. corresponding to each of the most frequently occurring attribute values: 6, 7, and 11.

The high pass and possibly low pass filters may be traversed in order to translate and scale the signal to a particular scale. In particular, low pass filters may be used to scale to a particular range of filter coefficient values, while high pass filters may be used to scale within the range defined by the low pass filter. In some cases, low pass filters are not needed. In particular, low pass filters may be included if an object attribute value ($l_0$, $l_1$, and $l_2$) > initial filter length (A).

Continuing the example, the following accuracy value can be used as a classification metric:

$$Accuracy = \frac{\#TP + \#TN}{\#TP + \#FP + \#FN + \#TN} \qquad (18)$$

where #TP, #TN, #FP and #FN quantify the total numbers of true positives, true negatives, false positives and false negatives, respectively.

The accuracy (according to equation (18)) obtained by applying the rational biorthogonal wavelet filter bank (RWFB) generated according to steps S101 to S113 is presented in Table 1 below, with different numbers $t$ of selected object attribute values. For comparison, accuracy values were also calculated for correlation filters, a standard wavelet filter bank, as well as optimized uniform M-channel wavelet filter banks (MCFB). The MCFBs were optimized to given object classes, but in contrast to the RWFB the rational sampling factors, the sampling factors for the MCFBs were all integers.

Table 1 (below) shows a comparison of the classification accuracy using different wavelet filter banks when classifying objects in the object classes dent $C_d$ and pimple $C_p$.

Table 1

| | | Accuracy | |
|---|---|---|---|
| **Standard method** | | $C_d$ | $C_p$ |
| Correlation filters | | 60% | 66% |
| Biorthogonal spline wavelet 3.5 | | 88% | 35% |
| Method | Matched | $C_d$ | $C_p$ |
| MCFB | $C_d$ | 90% | 73% |
| MCFB | $C_p$ | 67% | 78% |
| RWFB | $C_p$, $t=1$ | 75% | 70% |
| RWFB | $C_p$, $t=2$ | 84% | 84% |
| RWFB | $C_p$, t=3 | 95% | 89% |

From Table 1 (above), it can be seen that with a larger number t of selected object attribute values, the classification with RWFB improved. With three considered object attribute values (e.g. object sizes) the RWFB provides better results than MCFB as well as the standard spline wavelet. Up to 89% of pimples as well as 95% of dents were classified correctly by RWFB. Due to the specific optimization to given defect classes, the filter banks with MCFB and RWFB classify anomalies on the surfaces better than the standard biorthogonal spline wavelet. And by matching the filter lengths and sampling values to the most frequently occurring object attribute values in the image, the filter banks with RWFB deliver more accurate results than the MCFB.

According to another example, the method described in steps S101 to S113 was tested in a second application, i.e. to detect contaminations on a manufactured metal surface. In the test, there were a total of 78 contaminations in the form of black stains on a metal surface to be detected. On the surface, visible textures which are caused by manufacturing and which complicate the detection were also present. In this case the brightness curve of a stain on the surface was considered as the object curve.

In Table 2, the accuracy when using RWFB, *Thresholding* and a filter bank in which standard wavelets are used for detection is shown. The detection rate of the object class stain, $C_s$, is 94%, 95% and 96% by selecting 1, 2 and 3 object attribute values, respectively, compared to 68% with the standard biorthogonal wavelet and 70% with *Thresholding*.

Table 2 (below) shows the calculated accuracy when using different wavelet filter banks for classification of objects in the object class stain, $C_s$.

| Method | Accuracy |
|---|---|
| Thresholding | 70% |
| Biorthogonal spline wavelet 3.5 | 68% |

| Method | Matched | Accuracy |
|---|---|---|
| RWFB | $C_s$, $t=1$ | 94% |
| RWFB | $C_s$, $t=2$ | 95% |
| RWFB | $C_s$, $t=3$ | 96% |

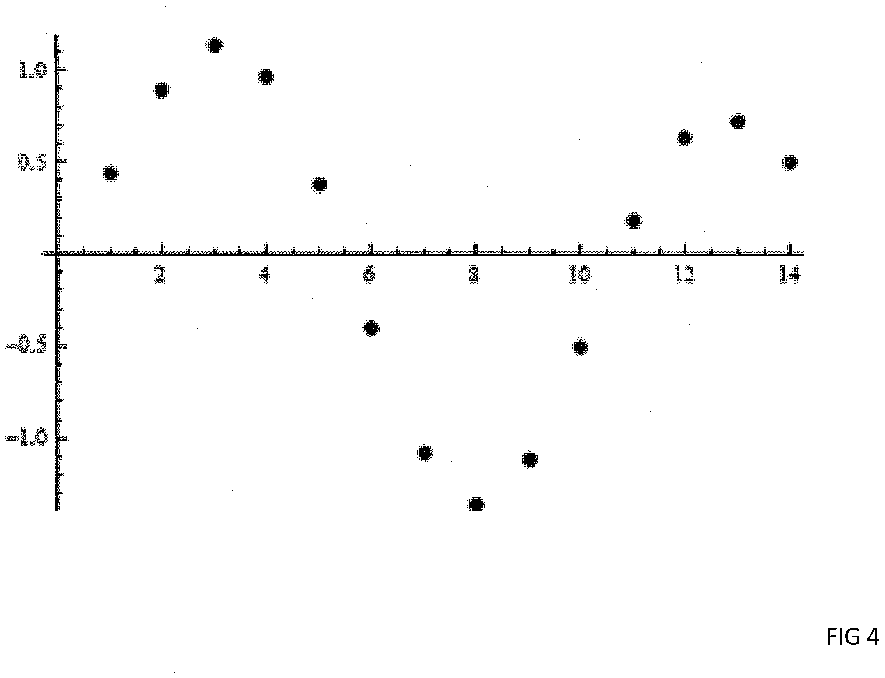

**FIG 4** shows the impulse response of an exemplary low pass filter. The coefficients of the low pass filter may be as follows:

$$h_{LP} = \{0.43978623801761074, 0.8958154830930642, 1.1354896994863743, \\ 0.9677521346320433, 0.3842896759604835, -0.4088265703791698, \\ -1.08142996020889, -1.3531383033780053, -1.1081543565835148, \\ -0.5002356087865941, 0.1784413602379559, 0.6355417637864227, \\ 0.7268138848685259, 0.5020681216267888\}$$

A low pass filter might not be necessary in order to classify a pixel of an image. In particular, the low pass filter may be useful if the initial filter length $\lambda$ is less than the largest object attribute value.

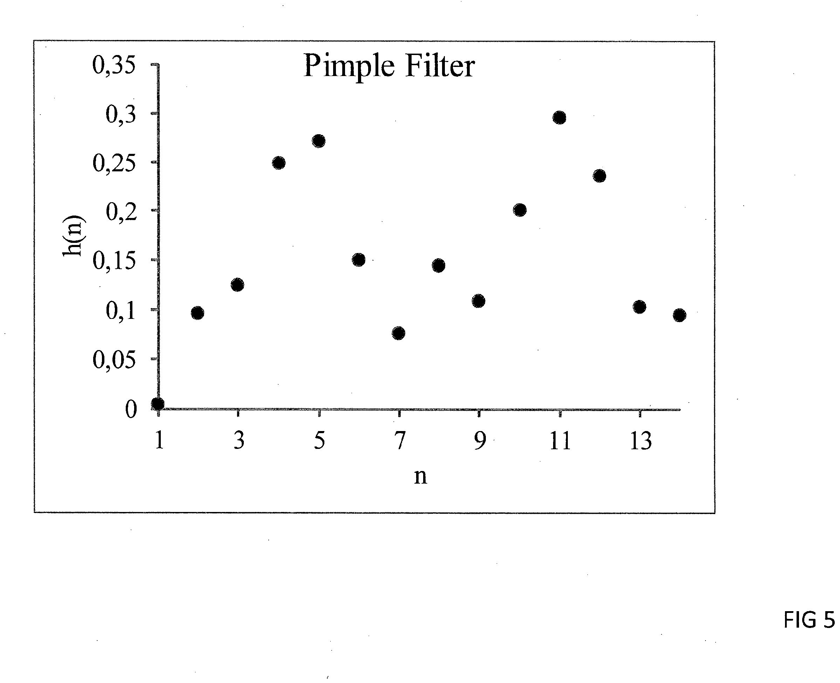

**FIG 5** shows the impulse response of an exemplary high pass filter. In particular, the high pass filter of FIG 5 may be the first image filter discussed above, i.e. before the image filter is matched to one of the object attribute values. The high pass filter may be optimized. In particular one or more of the following optimizations may have been performed on a generic high pass filter in order to generate the high pass filter of FIG 5:

- the noise may have been reduced,
- the distance between the high pass filter and the object filter may have been held to a minimum, e.g. as defined by the constant $\varepsilon_1$, as described above,
- the biorthogonality of the high pass filter with a corresponding low pass filter may have been ensured.

More specifically, optimizations to obtain the high pass filter of FIG 5 may have been performed as described in the context of step S113.

Exemplary coefficients of the high pass filter are as follows:

$$h_{HP} = \{0.003267969135259317, 0.09579977128724479, 0.12401568158655267, \\ 0.24836564534251082, 0.2711260594380506, 0.1498467030171376, \\ 0.075863485866632041, 0.14320084384847123, 0.10803410873122758, \\ 0.2007421497950007, 0.29485460658776463, 0.23580337823272893, \\ 0.10312669897816638, 0.0946841179075568\}$$

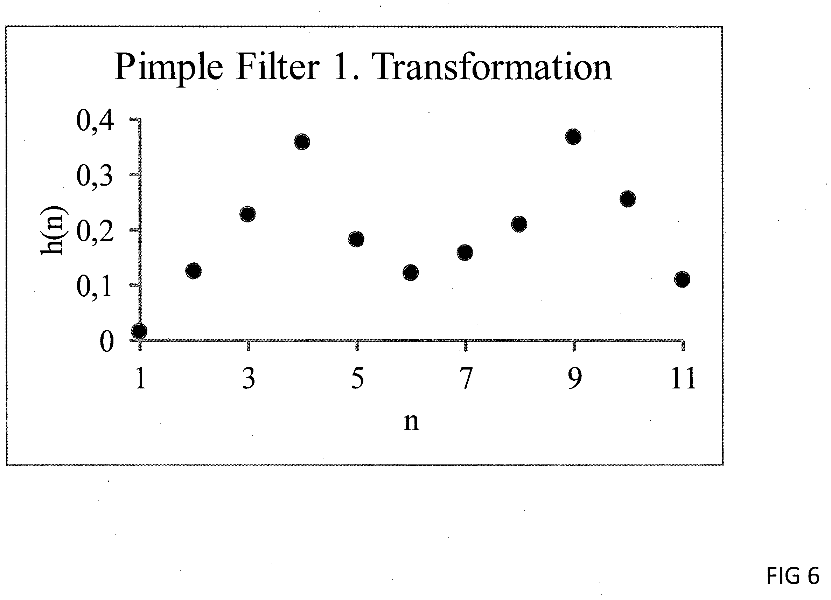

**FIG 6** shows the impulse response of another exemplary high pass filter. The high pass filter of FIG 6 may be the second image filter discussed above, i.e. after the image filter of FIG 5 has been transformed in order to match the first object attribute value, e.g. 11.

Optionally, a biorthogonal rational wavelet filter bank may be generated according to step S113 and the optimized according to the parameters calculated above.

**FIG 7** shows an exemplary filter bank with rational sampling factors. The exemplary filter bank of FIG 7 may be part of the biorthogonal rational wavelet filter bank discussed in step S113.

In particular, the filter bank includes the low pass filter $h_{LP}$ (e.g. the low pass filter of FIG 4) and the high pass filter $h_{HP}$ (e.g. the high pass filter of FIG 6). The filter bank also includes the upsampling factor $p_0$ for the low pass filter and the upsampling factor $p_1$ for the high pass filter $h_{HP}$. Further, the filter bank includes the downsampling factor $M$ for the low pass filter $h_{LP}$ and for the high pass filter $h_{HP}$.

In the context of the specific example of FIG 3, the filter bank would include the three matched high pass image filters. The low pass filter would not be necessary in the context of the example.

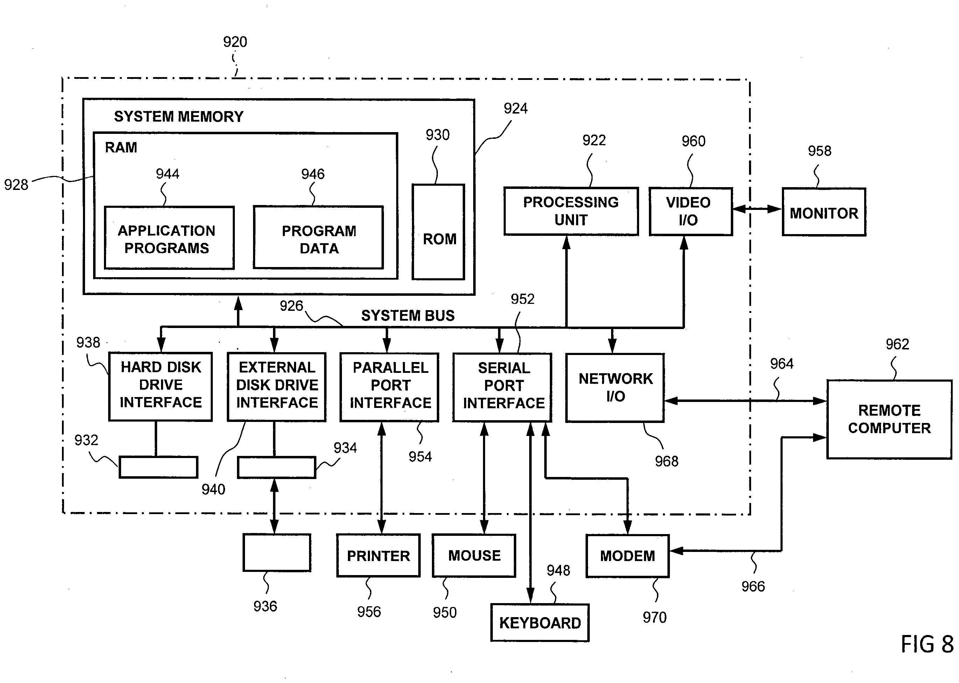

**FIG 8** shows an exemplary system for implementing the claimed subject matter including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and non-volatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method for classifying a pixel of an image, as described above. The relevant data may be organized in a database, for example a relational or object database.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in Figs. 1 to 7.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **FIG 8** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **FIG 8** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method for classifying a pixel of an image (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the method for classifying a pixel of an image.

According to an aspect, a computer-implemented method for classifying a pixel of an image is provided. The method comprises receiving the image. The method further comprises determining a plurality of image objects, wherein each of the image objects corresponds to the image.

The image objects represent a surface. The image objects represent potential anomalies on the surface.

For example, each object may comprise a plurality of pixels and each object may have a shape. Further, the image objects may be derived from the image using a less precise classification method. Alternatively, the image objects may be derived from a reference image similar to (sharing characteristics with) the received image. As yet another alternative, the image objects may correspond to anomalies manually derived from a reference surface.

The method further comprises establishing an object attribute value that is shared by (i.e. describes) a subset of the image objects, wherein the object attribute value quantifies an object attribute, and wherein the object attribute describes the image objects.

The subset of the image objects may be a proper subset. The object attribute is an object size (i.e. length or extent).

A plurality of object attribute values are established. Establishing the object attribute value comprises selecting the object attribute value depending on the number of image objects described by the object attribute value (e.g. object attribute values shared by the largest number of image objects are selected).

The method further comprises generating at least one image filter based on the object attribute value. The image filter is based on the object attribute value in the sense that the image filter is a function of or matched to the object attribute value. The at least one image filter is a plurality of filters arranged in a filter bank.

The method further comprises transforming, via the image filter, the pixel into at least one feature, and classifying the pixel in an object class by means of the feature.

The object class corresponds to a type of anomaly on the surface (e.g. a dent or a pimple) or the absence of an anomaly (i.e. "free" or "nothing").

The object class includes an object filter that describes a member object, wherein the member object is typical of the object class. The object filter is derived by sampling points from an object curve and normalizing the sampled points.

Generating the at least one image filter further comprises constructing the high pass filter such that a constant defines a maximum difference between the high pass filter and the object filter. In other words, generating the at least one image filter further comprises constructing the high pass filter such that there is an upper boundary constraining a difference between the high pass filter and the object filter.

The image filter may include an analysis filter (the analysis filter may also be a high pass filter). The analysis filter may have a corresponding synthesis filter. The analysis filter may be different from the synthesis filter. The synthesis filter might not be generated.

The sampling factor comprises an upsampling factor and a downsampling factor The upsampling factor may be an analysis factor, i.e. the upsampling factor may be used in conjunction with an analysis filter.

The downsampling factor may be greater than the upsampling factor.

In some cases, determining whether one of the image objects is a member of the object class comprises upsampling the image according to the upsampling factor, transforming the image, and downsampling the image according to the downsampling factor.

Calculating the factors comprises calculating, via numerical optimization, a ratio of the upsampling factor to the downsampling factor and a product of the filter length and the ratio such that the product is approximately equal to the object attribute value.

Accordingly, generating the image filter may comprise one or more of the following:

- calculating the same downsampling factor for the high pass filter and the low pass filter;
- calculating two upsampling factors such that the sum of the upsampling factor for the low pass filter and the upsampling factor for the high pass filter is equal to the downsampling factor.

For example, if the upsampling factor for the low pass filter is 1 and the upsampling factor for the high pass filter is 4, then the downsampling factor must be 5.

Generating the image filter may comprise determining a generic low pass filter and a generic high pass filter corresponding to the generic low pass filter and optimizing the generic low pass filter to construct an optimized low pass filter. Generating the image filter may further comprise combining the generic high pass filter and the optimized low pass filter in a non-uniform filter bank and transforming the non-uniform filter bank into a uniform filter bank determining a biorthogonality condition for the uniform filter bank. Generating the image filter may further comprise optimizing, using the biorthogonality condition as a constraint, the generic high pass filter to construct an optimized high pass filter.

Thus, the biorthogonality condition is used as a constraint when optimizing the high pass filter (i.e. constructing the optimized high pass filter from the generic high pass filter.

In general when a high pass filter corresponds to a low pass filter, the high pass filter may be the inverse of the low pass filter. Similarly when a low pass filter corresponds to a high pass filter, the low pass filter may be the inverse of the high pass filter.

Each of the image filters may be based on a different one of the object attribute values. Transforming the pixel may comprise transforming the pixel into a plurality of features, wherein each of the features is obtained from the pixel using a different one of the image filters. Transforming the pixel may further comprise assembling the features into a feature vector, wherein each feature in the feature vector describes the pixel and wherein each feature in the feature vector is based on a different object attribute value. In particular, the length of the feature vector may be equal to the number of object attribute values. Transforming the pixel may further comprise calculating a likelihood that the feature vector belongs to the object class by determining a function of the feature vector and parameter vectors describing the object class and classifying the pixel in the object class depending on the likelihood.

The method described above may also be implemented as a computer system, and as a computer program, e.g. a computer program product.

The computer system may include one or more data processing apparatuses and a data storage apparatus encoded with instructions that, when executed by the one or more data processing apparatuses, cause the data processing apparatuses to perform operations according to the method steps described above.

**Claims**

1. A computer-implemented method for detecting objects in an image representing anomalies on a surface, wherein an object size refers to a length of the major axis of the object or a diameter of the object, the method comprising:

   receiving an image of the surface;
   determining a plurality of image objects, wherein each of the image objects corresponds to the image;
   determining an object class, wherein the object class corresponds to a type of anomaly that can appear on the surface, wherein the object class includes a 1D object filter that describes a member object, wherein the member object is typical of the object class, wherein the object filter is derived by sampling points from an object curve and normalizing the sampled points;
   establishing a plurality of object size values for the object class, wherein each of the object size values is shared by a disjoint subset of the plurality of image objects, wherein each object size value quantifies the object size;
   sorting the established object size values according to frequency of occurrence;
   selecting a subset of the established object size values according to frequency of occurrence, wherein the subset consists of the most frequently occurring object size values;
   generating a plurality of image filters arranged in a biorthogonal wavelet filter bank, wherein the image filters include a high pass filter and a low pass filter, wherein the generating comprises approximating $p_1$, $M$, and $\lambda$ so that:

   $$\frac{p_1}{M} \lambda \approx l_{t-1}, ..., \left(\frac{p_1}{M}\right)^{u_1} \lambda \approx l_1, \left(\frac{p_1}{M}\right)^{u_0} \lambda \approx l_0$$

   where $p_1$ is an upsampling factor for the high pass filter, $M$ is a downsampling factor, $\lambda$ is an initial filter length, $u_0$ and $u_1$ are transformation coefficients such that $u_i \in \mathbb{N}$, $1 < u_i < u_{i-1}$, and $l_0$ to $l_{t-1}$ are the selected subset of object size values,
   wherein the sampling factors are restricted according to the following equation:

   $$p_0 + p_1 \doteq M$$

   wherein $p_0$ is an upsampling factor for the low pass filter;
   wherein the filter bank is optimized as follows:

   - wherein, in a first step, the low pass filter $h_{LP}$ is optimized with the following least square objective function:

   $$f_0(h_{LP}) = h_{LP}^T (P_{P_0} + P_{S_0}) h_{LP}$$

   - where $P_{P_0}$ and $P_{S_0}$, are real symmetric positive semi-definite matrices to optimize the pass-band and stop-band of $h_{LP}$,
   - wherein the objective function $f_0(h_{LP})$ is minimized according to the following constraint:

   $$g_0 : \| h_{LP} - h_q \|^2 > \varepsilon_0$$

   where $h_q$ is the object filter;

- wherein, in a second step, the high pass filter $h_{HP}$ is optimized while maintaining biorthogonality of the filter bank according to the following least square objective function:

$$f_1(h_{HP}) = h_{HP}^T(P_{P_1} + P_{S_1})h_{HP}$$

- wherein the following equation is used as a constraint when minimizing the objective function $f_1(h_{HP})$:

$$g_1 : \| h_{HP} - h_q \|^2 < \varepsilon_1$$

- wherein $\varepsilon_0$ and $\varepsilon_1$ are constants;

performing transformations of the image filters in the optimized filter bank in order to match the established object size values, wherein the transformations of the image filters cascade such that the result of a previous transformation is the basis for a next transformation, wherein for each transformation k performed by applying rational sampling factors $p_1$ and $M$, such that $(p_1/M)^k\lambda = l_j \in T$, the transformations produced for each object attribute value are considered as features $d_k$ for classification; and
determining whether the pixels can be classified in the object class by means of the features.

2. The method of any one of the preceding claims,
wherein the image filters include an analysis filter,
wherein the analysis filter has a corresponding synthesis filter, and
wherein the analysis filter is different from the synthesis filter.

3. A computer program product comprising computer-readable instructions, which, when loaded and executed on a computer system, cause the computer system to perform operations according to the method of any one of the preceding claims.

4. A computer system for detecting objects in an image representing anomalies on a surface, wherein an object size refers to a length of the major axis of the object or a diameter of the object, the system comprising:

one or more data processing apparatuses; and
a data storage apparatus encoded with instructions that, when executed by the one or more data processing apparatuses, cause the data processing apparatuses to perform operations comprising:

- receiving an image of the surface;
- determining a plurality of image objects, wherein each of the image objects corresponds to the image;
- determining an object class, wherein the object class corresponds to a type of anomaly that can appear on the surface, wherein the object class includes a 1D object filter that describes a member object, wherein the member object is typical of the object class, wherein the object filter is derived by sampling points from an object curve and normalizing the sampled points;
- establishing a plurality of object size values for the object class, wherein each of the object size values is shared by a disjoint subset of the plurality of image objects, wherein each object size value quantifies the object size;
- sorting the established object size values according to frequency of occurrence;
- selecting a subset of the established object size values according to frequency of occurrence, wherein the subset consists of at least one of the most frequently occurring object size values;
- generating a plurality of image filters arranged in a biorthogonal wavelet filter bank, wherein the image filters include a high pass filter, wherein the filter bank is constructed with wavelet filters, wherein the generating comprises approximating $p_1$, $M$, and $\lambda$ so that:

$$\frac{p_1}{M}\lambda \approx l_{t-1}, ..., \left(\frac{p_1}{M}\right)^{u_1}\lambda \approx l_1, \left(\frac{p_1}{M}\right)^{u_0}\lambda \approx l_0$$

- where $p_1$ is an upsampling factor for the high pass filter, $M$ is a downsampling factor, $\lambda$ is an initial filter

length, $u_0$ and $u_1$ are transformation coefficients such that $u_i \in \mathbb{N}$, $1 < u_i < u_{i-1}$, and $l_0$, to $l_{t-1}$ are the selected subset of object size values, wherein the sampling factors are restricted according to the following equation:

$$p_0 + p_1 \stackrel{!}{=} M$$

- wherein $p_0$ is an upsampling factor for the low pass filter;
- wherein the filter bank is optimized as follows:

   -- wherein, in a first step, the low pass filter $h_{LP}$ is optimized with the following least square objective function:

$$f_0(h_{LP}) = h_{LP}^T(P_{P_0} + P_{S_0})h_{LP}$$

   -- where $P_{P_0}$ and $P_{S_0}$ are real symmetric positive semi-definite matrices to optimize the pass-band and stop-band of $h_{LP}$,
   -- wherein the objective function $f_0(h_{LP})$ is minimized according to the following constraint:

$$g_0 : \| h_{LP} - h_q \|^2 > \varepsilon_0$$

   -- where $h_q$ is the object filter;
   -- wherein, in second step, the high pass filter $h_{HP}$ is optimized while maintaining biorthogonality of the filter bank according to the following least square objective function:

$$f_1(h_{HP}) = h_{HP}^T(P_{P_1} + P_{S_1})h_{HP}$$

   -- wherein the following equation is used as a constraint when minimizing the objective function $f_1(h_{HP})$:

$$g_1 : \| h_{HP} - h_q \|^2 < \varepsilon_1$$

   -- wherein $\varepsilon_0$ and $\varepsilon_1$ are constants;

- performing transformations of the image filters in the optimized filter bank in order to match the established object size values, wherein the transformations of the image filters cascade such that the result of a previous transformation is the basis for a next transformation, wherein for each transformation k performed by applying rational sampling factors $p_1$ and $M$, such that $(p_1/M)^k\lambda = l_j \in T$, the transformations produced for each object attribute value are considered as features $d_k$ for classification; and
- determining whether the pixels can be classified in the object class by means of the features.

**Patentansprüche**

1. Computerimplementiertes Verfahren zum Erkennen von Objekten in einem Bild, die Anomalien auf einer Oberfläche aufweisen, wobei eine Objektgröße sich auf eine Länge der Hauptachse des Objekts oder auf einen Durchmesser des Objekts bezieht, wobei das Verfahren Folgendes umfasst:

   Empfangen eines Bildes der Oberfläche;
   Bestimmen einer Vielzahl von Bildobjekten, wobei jedes der Bildobjekte dem Bild entspricht;
   Bestimmen einer Objektklasse, wobei die Objektklasse einer Art von Anomalie entspricht, die auf der Oberfläche erscheinen kann, wobei die Objektklasse einen 1D-Objektfilter umfasst, der ein Mitgliedsobjekt beschreibt, wobei das Mitgliedsobjekt typisch für die Objektklasse ist, wobei der Objektfilter durch das Abtasten von Punkten einer Objektkurve und Normalisieren der abgetasteten Punkte abgeleitet wird;

Feststellen einer Vielzahl von Objektgrößenwerten für die Objektklasse, wobei jeder der Objektgrößenwerte von einer disjunkten Untermenge der Vielzahl von Bildobjekten geteilt wird, wobei jeder Objektgrößenwert die Objektgröße quantifiziert;

Sortieren der festgestellten Objektgrößenwerte gemäß der Häufigkeit des Auftretens;

Auswählen einer Untermenge der festgestellten Objektgrößenwerte gemäß der Häufigkeit des Auftretens, wobei die Untermenge aus den am häufigsten auftretenden Objektgrößenwerten besteht;

Erstellen einer Vielzahl von Bildfiltern, die in einer biorthogonalen Wavelet-Filterbank angeordnet sind, wobei die Bildfilter einen Hochpassfilter und einen Tiefpassfilter umfassen, wobei das Erstellen das Annähern von $p_1$, M, und $\lambda$ umfasst, sodass:

$$\frac{p_1}{M} \lambda \approx l_{t-1}, \dots, \left(\frac{p_1}{M}\right)^{u_1} \lambda \approx l_1, \left(\frac{p_1}{M}\right)^{u_0} \lambda \approx l_0$$

wobei $p_1$ ein Upsampling-Faktor für den Hochpassfilter, M ein Downsampling-Faktor, $\lambda$ eine ursprüngliche Filterlänge ist, $u_0$ und $u_1$ Transformationkoeffizienten sind, sodass $u_i \in \mathbb{N}$, $1 < u_i < u_{i-1}$, und $l_0$ bis $l_{t-1}$ die ausgewählte Untermenge der Objektgrößenwerte sind,

wobei die Sampling-Faktoren gemäß der nachfolgenden Gleichung beschränkt sind:

$$p_0 + p_1 \stackrel{!}{=} M$$

wobei $p_0$ ein Upsampling-Faktor für den Tiefpassfilter ist;

wobei die Filterbank wie folgt optimiert ist:

- wobei in einem ersten Schritt der Tiefpassfilter $h_{LP}$ mit der folgenden Zielfunktion der kleinsten Quadrate optimiert wird:

$$f_0(h_{LP}) = h_{LP}^T \left(P_{P_0} + P_{S_0}\right) h_{LP}$$

- wobei $P_{P_0}$ und $P_{S_0}$ reell symmetrische positiv semidefinite Matrizen sind, um den Durchlassbereich und Sperrbereich von $h_{LP}$ zu optimieren,
- wobei die Zielfunktion $f_0(h_{LP})$ gemäß der folgenden Restriktion minimiert wird:

$$g_0: \left\| h_{LP} - h_q \right\|^2 > \varepsilon_0$$

wobei $h_q$ der Objektfilter ist;

- wobei in einem zweiten Schritt der Hochpassfilter $h_{HP}$ optimiert wird, während die Biorthogonalität der Filterbank gemäß der folgenden Zielfunktion der kleinsten Quadrate aufrechterhalten bleibt:

$$f_1(h_{HP}) = h_{HP}^T \left(P_{P_1} + P_{S_1}\right) h_{HP}$$

- wobei die folgende Gleichung beim Minimieren der Zielfunktion $f_1(h_{HP})$ als Restriktion verwendet wird:

$$g_1: \left\| h_{HP} - h_q \right\|^2 < \varepsilon_1$$

- wobei $\varepsilon_0$ und $\varepsilon_1$ Konstanten sind;

Ausführen von Transformationen der Bildfilter in der optimierten Filterbank, damit diese den festgestellten Objektgrößenwerten entsprechen, wobei die Transformationen der Bildfilter so kaskadieren, dass das Ergebnis einer vorherigen Transformation die Grundlage für eine nächste Transformation ist, wobei jede Transformation k, die durch das Anwenden der rationalen Sampling-Faktoren $p_1$ und M so ausgeführt wird, dass $(p_1/M)^k \lambda = l_j \in$ T, die für jeden Objektattributwert erzeugten Transformationen als Merkmale $d_k$ für die Klassifizierung angesehen werden; und

Bestimmen, ob die Pixel mittels der Merkmale in der Objektklasse klassifiziert werden können.

2. Verfahren nach einem der vorhergehenden Ansprüche,
   wobei die Bildfilter einen Analysefilter umfassen,
   wobei der Analysefilter einen entsprechenden Synthesefilter aufweist, und
   wobei sich der Analysefilter vom Synthesefilter unterscheidet.

3. Computerprogramm-Produkt, das computerlesbare Anweisungen umfasst, die, wenn sie in ein Computersystem geladen und von diesem ausgeführt werden, das Computersystem veranlassen, Betriebe gemäß dem Verfahren von einem der vorhergehenden Ansprüche auszuführen.

4. Computersystem zum Erkennen von Objekten in einem Bild, die Anomalien auf einer Oberfläche aufweisen, wobei eine Objektgröße sich auf eine Länge der Hauptachse des Objekts oder einen Durchmesser des Objekts bezieht, wobei das System Folgendes umfasst:

   eine oder mehrere Datenverarbeitungseinrichtungen; und
   eine Datenspeichereinrichtung, die mit Anweisungen codiert ist, die, wenn sie von der einen oder mehreren Datenverarbeitungseinrichtungen ausgeführt werden, die Datenverarbeitungseinrichtungen veranlassen, Betriebe auszuführen, umfassend:

   - Empfangen eines Bildes der Oberfläche;
   - Bestimmen einer Vielzahl von Bildobjekten, wobei jedes der Bildobjekte dem Bild entspricht;
   - Bestimmen einer Objektklasse, wobei die Objektklasse einer Art von Anomalie entspricht, die auf der Oberfläche erscheinen kann, wobei die Objektklasse einen 1D-Objektfilter umfasst, der ein Mitgliedsobjekt beschreibt, wobei das Mitgliedsobjekt typisch für die Objektklasse ist, wobei der Objektfilter durch das Abtasten von Punkten einer Objektkurve und Normalisieren der abgetasteten Punkte abgeleitet wird;
   - Feststellen einer Vielzahl von Objektgrößenwerten für die Objektklasse, wobei jeder der Objektgrößenwerte von einer disjunkten Untermenge der Vielzahl von Bildobjekten geteilt wird, wobei jeder Objektgrößenwert die Objektgröße quantifiziert;
   - Sortieren der festgestellten Objektgrößenwerte gemäß der Häufigkeit des Auftretens;
   - Auswählen einer Untermenge der festgestellten Objektgrößenwerte gemäß der Häufigkeit des Auftretens, wobei die Untermenge aus mindestens einem der am häufigsten auftretenden Objektgrößenwerte besteht;
   - Erstellen einer Vielzahl von Bildfiltern, die in einer biorthogonalen Wavelet-Filterbank angeordnet sind, wobei die Bildfilter einen Hochpassfilter umfassen, wobei die Filterbank mit Wavelet-Filtern ausgeführt ist, wobei das Erstellen das Annähern von $p_1$, M, und $\lambda$ umfasst, sodass:

$$\frac{p_1}{M} \lambda \approx l_{t-1}, ..., \left(\frac{p_1}{M}\right)^{u_1} \lambda \approx l_1, \left(\frac{p_1}{M}\right)^{u_0} \lambda \approx l_0$$

   - wobei $p_1$ ein Upsampling-Faktor für den Hochpassfilter, M ein Downsampling-Faktor, $\lambda$ eine ursprüngliche Filterlänge ist, $u_0$ und $u_1$ Transformationkoeffizienten sind, sodass $u_i \in \mathbb{N}$, $1 < u_i < u_{i-1}$, und $l_0$ bis $l_{t-1}$ die ausgewählte Untermenge der Objektgrößenwerte sind, wobei die Sampling-Faktoren gemäß der nachfolgenden Gleichung beschränkt sind:

$$p_0 + p_1 \stackrel{!}{=} M$$

   - wobei $p_0$ ein Upsampling-Faktor für den Tiefpassfilter ist;
   - wobei die Filterbank wie folgt optimiert ist:

- wobei in einem ersten Schritt der Tiefpassfilter $h_{LP}$ mit der folgenden Zielfunktion der kleinsten Quadrate optimiert wird:

$$f_0(h_{LP}) = h_{LP}^T \left( P_{P_0} + P_{S_0} \right) h_{LP}$$

- wobei $P_{P_0}$ und $P_{S_0}$ reell symmetrische positiv semidefinite Matrizen sind, um den Durchlassbereich und Sperrbereich von $h_{LP}$ zu optimieren,
- wobei die Zielfunktion $f_0(h_{LP})$ gemäß der folgenden Restriktion minimiert wird:

$$g_0: \left\| h_{LP} - h_q \right\|^2 > \varepsilon_0$$

- wobei $h_q$ der Objektfilter ist;
- wobei in einem zweiten Schritt der Hochpassfilter $h_{HP}$ optimiert wird, während die Biorthogonalität der Filterbank gemäß der folgenden Zielfunktion der kleinsten Quadrate aufrechterhalten bleibt:

$$f_1(h_{HP}) = h_{HP}^T \left( P_{P_1} + P_{S_1} \right) h_{HP}$$

- wobei die folgende Gleichung beim Minimieren der Zielfunktion $f_1(h_{HP})$ als Restriktion verwendet wird:

$$g_1: \left\| h_{HP} - h_q \right\|^2 < \varepsilon_1$$

- wobei $\varepsilon_0$ und $\varepsilon_1$ Konstanten sind;

- Ausführen von Transformationen der Bildfilter in der optimierten Filterbank, damit diese den festgestellten Objektgrößenwerten entsprechen, wobei die Transformationen der Bildfilter so kaskadieren, dass das Ergebnis einer vorherigen Transformation die Grundlage für eine nächste Transformation ist, wobei jede Transformation k, die durch das Anwenden der rationalen Sampling-Faktoren $p_1$ und M so ausgeführt wird, dass $(p_1/M)^k \lambda = l_j \in$ T, die für jeden Objektattributwert erzeugten Transformationen als Merkmale $d_k$ für die Klassifizierung angesehen werden; und
- Bestimmen, ob die Pixel mittels der Merkmale in der Objektklasse klassifiziert werden können.

**Revendications**

1. Procédé mis en oeuvre par ordinateur pour la détection d'objets dans une image représentant des anomalies sur une surface, dans lequel une dimension d'un objet se rapporte à une longueur de l'axe majeur de l'objet ou à un diamètre de l'objet, le procédé consistant à :

recevoir une image de la surface ;
déterminer une pluralité d'objets d'image, dans lequel chacun des objets d'image correspond à l'image ;
déterminer une classe d'objet, dans lequel la classe d'objet correspond à un type d'anomalie qui peut apparaître sur la surface, dans lequel la classe d'objet comprend un filtre d'objet 1D qui décrit un objet de l'élément, dans lequel l'objet de l'élément est typique de la classe d'objet, dans lequel le filtre d'objet est dérivé en échantillonnant des points d'une courbe de l'objet et en étalonnant les points échantillonnés ;
établir une pluralité de valeurs de dimension d'un objet pour la classe d'objet,
dans lequel chacune des valeurs de dimension d'un objet est partagée par un sous-ensemble disjoint de la pluralité d'objets d'image, dans lequel chaque valeur de dimension d'un objet quantifie la dimension d'un objet ;
trier les valeurs de dimension d'un objet établies selon la fréquence de survenue ;
sélectionner un sous-ensemble des valeurs de dimension d'un objet établies selon la fréquence de survenue, dans lequel le sous-ensemble est constitué des valeurs de dimension d'un objet survenant le plus souvent ;
générer une pluralité de filtres d'image placée dans un banc de filtres à ondelettes biorthogonales, dans lequel les filtres d'image comprennent un filtre passe-haut et un filtre passe-bas, dans lequel la génération comprend environ $\rho_1$, M, et $\lambda$ de sorte que :

$$\frac{p_1}{M} \lambda \approx l_{t-1}, \ldots, \left(\frac{p_1}{M}\right)^{u_1} \lambda \approx l_1, \left(\frac{p_1}{M}\right)^{u_0} \lambda \approx l_0$$

où $p_1$ est un facteur de suréchantillonnage pour le filtre passe-haut, $M$ est un facteur de sous-échantillonnage, $\lambda$ est une longueur de filtre initiale, $u_0$ et $u_1$ sont des coefficients de transformation de sorte que $u_i \in \mathbb{N}$, $1 < u_i < u_{i-1}$, et $l_0$ à $l_{t-1}$ sont le sous-ensemble sélectionné de valeurs de dimension d'un objet, dans lequel les facteurs d'échantillonnage sont restreints selon l'équation suivante :

$$p_0 + p_1 \overset{!}{=} M$$

dans laquelle $p_0$ est un facteur de suréchantillonnage pour le filtre passe-bas ;
dans lequel le banc de filtres est optimisé comme suit :

- dans lequel, dans une première étape, le filtre passe-bas $h_{LP}$ est optimisé avec la fonction objective des moindres carrés suivante :

$$f_0(h_{LP}) = h_{LP}^T \left(P_{P_0} + P_{S_0}\right) h_{LP}$$

- où $P_{P_0}$ et $P_{S_0}$ sont de vraies matrices semi-définies positives symétriques pour optimiser la bande passante et la bande d'arrêt de $h_{LP}$,
- dans lequel la fonction objective $f_0(h_{LP})$ est minimisée selon la contrainte suivante :

$$g_0 \colon \left\| h_{LP} - h_q \right\|^2 > \varepsilon_0$$

où $h_q$ est le filtre d'objet ;

- dans lequel, dans une seconde étape, le filtre passe-haut $h_{HP}$ est optimisé tout en maintenant la bi-orthogonalité du banc de filtres selon la fonction objective des moindres carrés suivante :

$$f_1(h_{HP}) = h_{HP}^T \left(P_{P_1} + P_{S_1}\right) h_{HP}$$

- dans lequel l'équation suivante est utilisée comme une contrainte lors de la minimisation de la fonction objective $f_1(h_{HP})$ :

$$g_1 \colon \left\| h_{HP} - h_q \right\|^2 < \varepsilon_1$$

- dans laquelle $\varepsilon_0$ et $\varepsilon_1$ sont des constantes ;

effectuer des transformations des filtres d'image dans le banc de filtres optimisé pour correspondre aux valeurs de dimension d'un objet établies, dans lequel les transformations des filtres d'image cascadent de sorte que le résultat d'une transformation précédente est la base d'une prochaine transformation, dans lequel, pour chaque transformation k exécutée en appliquant les facteurs d'échantillonnage rationnels $p_1$ et $M$, de sorte que $(p_1/M)^k \lambda = l_j \in T$, les transformations produites pour chaque valeur d'attribut d'objet sont considérées comme des caractéristiques $d_k$ pour une classification ; et
déterminer si les pixels peuvent être classés dans la classe d'objet au moyen des caractéristiques.

2. Procédé selon l'une quelconque des revendications précédentes,
dans lequel les filtres d'image comprennent un filtre d'analyse,
dans lequel le filtre d'analyse a un filtre de synthèse correspondant, et

dans lequel le filtre d'analyse est différent du filtre de synthèse.

3. Produit de programme informatique comprenant des instructions lisibles par ordinateur, lesquelles, lorsque chargées et exécutées sur un système informatique, amènent le système informatique à exécuter des opérations selon le procédé de l'une quelconque des revendications précédentes.

4. Système informatique pour la détection d'objets dans une image représentant des anomalies sur une surface, dans lequel une dimension d'un objet se rapporte à une longueur de l'axe majeur de l'objet ou à un diamètre de l'objet, le système comprenant :

un ou plusieurs appareils de traitement de données ; et
un appareil de stockage de données codé avec des instructions qui, lorsqu'elles sont exécutées par l'un ou plusieurs appareils de traitement de données, amènent les appareils de traitement de données pour exécuter des opérations consistant à :

- recevoir une image de la surface ;
- déterminer une pluralité d'objets d'image, dans lequel chacun des objets d'image correspond à l'image ;
- déterminer une classe d'objet, dans lequel la classe d'objet correspond à un type d'anomalie qui peut apparaître sur la surface, dans lequel la classe d'objet comprend un filtre d'objet 1D qui décrit un objet de l'élément, dans lequel l'objet de l'élément est typique de la classe d'objet, dans lequel le filtre d'objet est dérivé en échantillonnant des points d'une courbe de l'objet et en étalonnant les points échantillonnés ;
- établir une pluralité de valeurs de dimension d'un objet pour la classe d'objet, dans lequel chacune des valeurs de dimension d'un objet est partagée par un sous-ensemble disjoint de la pluralité d'objets d'image, dans lequel chaque valeur de dimension d'un objet quantifie la dimension d'un objet ;
- trier les valeurs de dimension d'un objet établies selon la fréquence de survenue ;
- sélectionner un sous-ensemble de valeurs de dimension d'un objet établies selon la fréquence de survenue, dans lequel le sous-ensemble est constitué d'au moins une des valeurs de dimension d'un objet survenant le plus souvent ;
- générer une pluralité de filtres d'image placée dans un banc de filtres à ondelettes biorthogonales, dans lequel les filtres d'image comprennent un filtre passe-haut, dans lequel le banc de filtres est construit avec des filtres à ondelettes, dans lequel la génération comprend environ $\rho_1$, $M$ et $\lambda$ de sorte que :

$$\frac{p_1}{M}\,\lambda \approx l_{t-1}, \ldots, \left(\frac{p_1}{M}\right)^{u_1}\lambda \approx l_1, \left(\frac{p_1}{M}\right)^{u_0}\lambda \approx l_0$$

- où $p_1$ est un facteur de suréchantillonnage pour le filtre passe-haut, $M$ est un facteur de sous-échantillonnage, $\lambda$ est une longueur de filtre initiale, $u_0$ et $u_1$ sont des coefficients de transformation de sorte que $u_i \in \mathbb{N}$, $1 < u_i < u_{i-1}$, et $l_0$ à $l_{t-1}$ sont le sous-ensemble sélectionné de valeurs de dimension d'un objet, dans lequel les facteurs d'échantillonnage sont restreints selon l'équation suivante :

$$p_0 + p_1 \overset{!}{=} M$$

- dans laquelle $p_0$ est un facteur de suréchantillonnage pour le filtre passe-bas ;
- dans lequel le banc de filtres est optimisé comme suit :

- dans lequel, dans une première étape, le filtre passe-bas $h_{LP}$ est optimisé avec la fonction objective des moindres carrés suivante :

$$f_0(h_{LP}) = h_{LP}^T \left(P_{P_0} + P_{S_0}\right)h_{LP}$$

- où $P_{P_0}$ et $P_{S_0}$ sont de vraies matrices semi-définies positives symétriques pour optimiser la bande passante et la bande d'arrêt de $h_{LP}$,

- dans lequel la fonction objective $f_0(h_{LP})$ est minimisée selon la contrainte suivante :

$$g_0 \colon \left\| h_{LP} - h_q \right\|^2 > \varepsilon_0$$

- où $h_q$ est le filtre d'objet ;
- dans lequel, dans une seconde étape, le filtre passe-haut $h_{HP}$ est optimisé tout en maintenant la bi-orthogonalité du banc de filtres selon la fonction objective des moindres carrés suivante :

$$f_1(h_{HP}) \, = \, h_{HP}^T \left( P_{P_1} + P_{S_1} \right) h_{HP}$$

- dans lequel l'équation suivante est utilisée comme une contrainte lors de la minimisation de la fonction objective $f_1(h_{HP})$:

$$g_1 \colon \left\| h_{HP} - h_q \right\|^2 < \varepsilon_1$$

- dans laquelle $\varepsilon_0$ et $\varepsilon_1$ sont des constantes ;

- effectuer des transformations des filtres d'image dans le banc de filtres optimisé pour correspondre aux valeurs de dimension d'un objet établies, dans lequel les transformations des filtres d'image cascadent de sorte que le résultat d'une transformation précédente est la base d'une prochaine transformation, dans lequel, pour chaque transformation k exécutée en appliquant les facteurs d'échantillonnage rationnels $p_1$ et $M$, de sorte que $(p_1/M)^k \lambda = l_j \in$ T, les transformations produites pour chaque valeur d'attribut d'objet sont considérées comme des caractéristiques $d_k$ pour une classification ; et
- déterminer si les pixels peuvent être classés dans la classe d'objet au moyen des caractéristiques.

EP 2 977 933 B1

```
┌─────────────────────────────────┐  S101
│   Receive Image to be classified │
└─────────────────────────────────┘
                 │
                 ▼
        ┌──────────────────┐  S103
        │ Detect image objects │
        └──────────────────┘
                 │
                 ▼
        ┌──────────────────┐  S105
        │ Calculate object sizes │
        └──────────────────┘
                 │
                 ▼
        ┌──────────────────┐  S107
        │ Sort sizes by frequency │
        │     lⱼ < lⱼ₊₁      │
        └──────────────────┘
                 │
                 ▼
┌─────────────────────────────────┐  S109
│ Select the most frequent object │
│ sizes T = {lⱼ, j = 0, ..., t − 1} │
└─────────────────────────────────┘
                 │
                 ▼
┌─────────────────────────────────┐  S111
│ Determine p₁, M, λ based on T    │
│ ...                              │
└─────────────────────────────────┘
                 │
                 ▼
┌─────────────────────────────────┐  S113
│ Design rational Wavelet Filter   │
│ Bank with given filter length λ, │
│ sampling factors p₁, M           │
└─────────────────────────────────┘
```

**Sort sizes by frequency**
$$l_j < l_{j+1}$$

**Select the most frequent object sizes** $T = \{l_j, j = 0, \ldots, t - 1\}$

**Determine** $p_1, M, \lambda$ **based on** $T$ **so that:**
$$\frac{p_1}{M}\lambda \approx l_{t-1}, \ldots, \left(\frac{p_1}{M}\right)^{u_1}\lambda \approx l_1, \left(\frac{p_1}{M}\right)^{u_0}\lambda \approx l_0$$

**Design rational Wavelet Filter Bank with given filter length** $\lambda$, **sampling factors** $p_1, M$

FIG 1

FIG 2

EP 2 977 933 B1

FIG 3

EP 2 977 933 B1

FIG 4

Pimple Filter

FIG 5

EP 2 977 933 B1

FIG 6

FIG 7

FIG 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. WERLING ; M. MAI ; M. HEIZMANN ; J. BEYER-ER.** Inspection of specular and partially specular surfaces. *Metrology and Measurement Systems,* 2009, vol. 16, 415-431
- **T. GREINER.** Orthogonal and biorthogonal texture matched wavelet filter banks for hierarchical texture analysis. *Signal Processing,* 1996, vol. 54 (1), 1-22
- **S.T.N. NGUYEN ; B.W.-H. NG.** Bi-orthogonal rational discrete wavelet transform with multiple regularity orders and application experiments. *Signal Processing,* 2013, vol. 93 (11), 3014-3026
- **Y. WISUTMETHANGOON ; T. Q. NGUYEN.** A method for design of Mth-band filters. *IEEE Trans. Signal Processing,* 1999, vol. 47 (6), 1669-1678
- **M. VETTERLI.** Filter banks allowing perfect reconstruction. *Signal Processing,* 1986, vol. 10 (3), 219-244